(19) **Europäisches Patentamt**

**European Patent Office**

**Office européen des brevets**

(11) **EP 0 744 017 B1**

(12) **EUROPEAN PATENT SPECIFICATION**

(45) Date of publication and mention
of the grant of the patent:
**09.02.2000 Bulletin 2000/06**

(51) Int. Cl.[7]: **G01H 1/00**, G01M 13/04,
G01B 7/00

(21) Application number: **94919973.1**

(22) Date of filing: **05.04.1994**

(86) International application number:
**PCT/US94/03736**

(87) International publication number:
**WO 95/27183 (12.10.1995 Gazette 1995/43)**

(54) **NONINVASIVE METHOD AND APPARATUS FOR DETERMINING RESONANCE INFORMATION FOR ROTATING MACHINERY COMPONENTS AND FOR ANTICIPATING COMPONENT FAILURE FROM CHANGES THEREIN**

NICHTINVASIVES VERFAHREN UND VORRICHTUNG ZUR FESTSTELLUNG DER RESONANZBEDINGUNGEN VON BAUELEMENTEN EINER ROTIERENDEN MASCHINE MIT VORHERSAGE VON BAUELEMENTFEHLERN DURCH ÄNDERUNG DIESER BEDINGUNGEN

PROCEDE ET APPAREIL NON-INVASIFS POUR OBTENIR DES INFORMATIONS RELATIVES A LA RESONANCE DANS DES COMPOSANTS DE MACHINES TOURNANTES ET POUR ANTICIPER DES DEFAILLANCES DANS CES COMPOSANTS A LA SUITE DE CHANGEMENTS S'Y PRODUISANT

(84) Designated Contracting States:
**AT BE CH DE DK ES FR GB GR IE IT LI LU MC NL PT SE**

(43) Date of publication of application:
**27.11.1996 Bulletin 1996/48**

(73) Proprietor:
**MONITORING TECHNOLOGY CORPORATION**
**Fairfax, VA 22031 (US)**

(72) Inventors:
• **HERNANDEZ, Walter, C.**
**Potomac, MD 20854 (US)**
• **PAGE, Edward, A.**
**Kensington, MD 20895 (US)**

(74) Representative:
**Calderbank, Thomas Roger et al**
**MEWBURN ELLIS**
**York House**
**23 Kingsway**
**London WC2B 6HP (GB)**

(56) References cited:
| | |
|---|---|
| **US-A- 4 302 813** | **US-A- 4 352 293** |
| **US-A- 4 426 641** | **US-A- 5 109 700** |
| **US-A- 5 115 671** | |

**Description**

*BACKGROUND*

This invention concerns rotating machines, such as turbines and pumps, which are susceptible to catastrophic failure in operation. Such failure may be due to shaft cracking or cracking of a component (such as a blade or rotor) attached to the shaft. The invention concerns means for noninvasively monitoring such machinery to anticipate occurrence of such failure, so that the machinery can be shut down before the failure occurs.

Attempts have been made in the past to detect cracks in pump shafts and turbine blades, but the effectiveness of the methods attempted has not been established. Moreover, these methods are considered impractical for wide application. A method investigated by Pratt & Whitney involved detecting passage of individual turbine blades by their interruption of a light beam, synchronizing blade signals with an external reference, and monitoring the difference between actual and expected blade rotation angles. Hardware proposed to implement this idea included fiber optic probes to be installed inside the turbine to transmit and receive light beams, and related electronic apparatus. This system's requirement of installing optic sensors deep within a turbine and then routing signals out of that environment posed serious implementation difficulties because of the harsh, live-steam environment in which the apparatus had to be placed.

Another method, under investigation by Liberty Technology Center, involves installing acoustic Doppler instrumentation within a turbine. This method poses similar implementation difficulties because of the same harsh-environment problem.

Noninvasive methods have been proposed, also, based on use of externally placed vibration sensors. However, the multitude of vibration frequencies present in such signals has been a major obstacle to extracting signals representative of blade failure conditions.

US-A-4 426 641 describes an apparatus for controlling a steam turbine. Vibration detectors are provided at the bearings of the turbine axis and a train of pulse signals is generated by a pulse gear mounted on said axis. The vibration signals are converted by an A/D converter which is clocked in synchronism with the shaft rotation by help of said train of pulse signals, and the digital output is processed by a frequency analysing program using FFT or DFT.

*OBJECTS AND SUMMARY OF THE INVENTION*

It is therefore an object of this invention to provide a noninvasive method of measuring vibration resonance information about rotating machinery shafts and components attached thereto. The term "measuring resonance information," as used here, refers both to determining average frequencies of vibration resonant modes and also to determining other characteristics associated with vibration resonances, such as variance of the resonance frequency curve round the mean, skewness of the resonance curve round the mean, and kurtosis (peakedness) of the resonance curve round the mean, as well as methods of historically evaluating such data to determine whether a significant change in such characteristics is occurring.

A noninvasive method is desired here to avoid the problems created by the harsh internal environment of many large machines, such as the live-steam environment inside a steam turbine. A noninvasive method is also desired to facilitate retrofitting existing equipment and also to facilitate possible modification or repair of the monitoring equipment.

A further object of the invention is to provide a reliable automatic method of predicting component failure before it occurs, and to do so during regular operation of the equipment. This serves several purposes. First, the rotating machinery system can be kept in continuous operation with minimal down time for post-failure repair (which typically takes more time than replacement of a defective part before catastrophic failure, particularly if such failure results in damage to other parts in addition to the defective part).

In addition, down time is avoided that would otherwise have to be incurred for nonscheduled inspections to be made to examine or test components for cracks in order to anticipate failure before it occurs. Further, down time is saved that would be incurred while ordering and waiting for expensive parts that are not inventoried.

The present invention realizes these objectives using the novel approach of measuring signals associated with modulation of shaft rotation frequency. Such modulation is induced by resonant oscillatory motion of rotating components, such as blades and the shaft itself. The signals are processed in accordance with the invention to provide further signals indicative of changes in resonant responses of components, which are associated with changes in blade and shaft structure. At least three kinds of change in blade and shaft structure cause changes in the resonant frequencies of these elements. Chemical and metallurgical changes can cause stiffening, which increases resonant frequencies. Cracking and corrosion of blades cause their resonant frequencies to decrease.

The modulation signals of interest are often at a very low level. For example, resonances of turbine blades may modulate the 30 Hz fundamental of the main shaft of a 4-pole turbine-generator set by $\pm\,0.001$ Hz or less. Further, these signals are contaminated by noise and other signals. It is therefore a further object of the invention to separate the signals of interest from noise and undesired signals, and circuitry for that purpose is disclosed.

A further object of the invention is to implement procedures for identifying changes in resonant vibration characteristics, so as to anticipate failure that may result from factors of which such changes are symptomatic. Circuitry and procedures for monitoring and identifying such changes in resonant vibration characteristics are therefore disclosed.

A number of different implementations of the invention, and of various aspects thereof, are disclosed in the specification. Further empirical data may suggest variations on these implementations, as well as as-yet unrecognized advantages that certain implementations may possess relative to others. However, at this time the inventors consider the following implementation to be preferable:

A sensor is used to detect instantaneous shaft rotation frequency of a rotating machine such as a steam turbine driving a 4-pole alternator rotating at 30 rotations per second. A magnetic transducer detects passage of gear teeth on a bull gear (for example, an 80-tooth gear) with which existing such turbines are customarily equipped. The transducer provides blip-like signals (hereafter termed "pulses") with some concomitant noise. The pulses are advantageously conditioned by conventional means to provide cleaner pulses. The transducer provides an integral number of pulses per shaft rotation. (For example, 80 pulses per rotation, which provides a pulse repetition rate of 2400 pulses per second for the foregoing 30 Hz turbine shaft. Throughout this summary, a 30 Hz shaft rotation rate and 2400 pulse per second rate will used be illustratively.)

The pulses are fed to a pulse-converter circuit that provides frequency-to-voltage conversion. Accordingly, an analog voltage is provided that is representative of instantaneous pulse frequency, and thus also of instantaneous shaft rotation-frequency. The analog voltage is then converted to a digital signal. That signal includes substantial random noise and interference signals at 30 Hz and harmonics thereof. In addition, it contains signals representative of the modulation frequencies of interest (for example, 78 Hz), but at a very low level (for example, 1 part in 100,000 of the signal amplitude or less).

A set of the digital signals is subjected to Discrete Fourier Transform (DFT) analysis, in which a data record is made for a set of signals containing data from M (typically 100) complete shaft rotations. The analog-to-digital convener is controlled to read the analog voltage for an integral number of data points for each complete shaft rotation. This is done by using the sensor pulses to clock the analog-to-digital convener. Then, when the data segment length is set to M complete rotations, the rotation frequency and its harmonics (30 Hz, 60 Hz, 90 Hz, etc.) fall precisely on spectral bins of the DFT analysis. That in turn confines such harmonic interference to those spectral bins and avoids leakage to other bins.

The result of this analysis is a DFT spectrum containing peaks at the shaft harmonics and also at the modulating frequencies of interest. Spectral data related to the modulating frequencies are recorded and monitored for trend analysis. Zooming in on the resonant frequencies of a set of 60 to 100 or more large blades of one stage of a steam turbine typically shows a distribution of resonant frequencies with a somewhat bell-shaped distribution (for example, 78 Hz with a $\pm 2$ Hz bandwidth). The shape of the resonance curve is appropriately analyzed for skewness about the mean, variance, kurtosis, etc. The resonance curve is also appropriately monitored for formation of secondary peaks as shoulders on the main peak. Changes in these characteristics over time are considered indicative of physical changes in the turbine blades or subsets thereof. Those in the industry consider such changes to be of interest and a cause for concern that blade deterioration may be occurring that could lead to blade failure.

An additional signal-processing procedure is considered particularly effective in eliminating noise other than shaft rotation-frequency harmonics. Lowpass-filtered sensor pulses are fed directly to an analog-to-digital convener without frequency-voltage conversion, and a computer controls the digital conversion electronics to provide an integral number of data points during each complete shaft rotation. When DFT (or FFT) analysis is applied to data recorded from such an integral number of shaft rotations, shaft harmonic interference is greatly reduced. Signals in the complex spectrum of such a DFT analysis are then subjected to bispectrum-based analysis procedures that emphasize amplitude of signals originating from true sources of shaft-rate modulation of interest and minimize amplitude contributions of signals from other sources.

*BRIEF DESCRIPTION OF DRAWINGS*

FIG. **1** shows a system comprising a horizontally mounted low-pressure steam turbine and generator, together with a control system in accordance with the invention.

FIG. **2** shows a portion of a similar system comprising a vertically mounted electric pump, together with the sensor and sensor interface portions of a control system in accordance with the invention.

FIG. **3 a-c** shows waveforms that occur in sensor and demodulation circuitry utilized in the invention. FIG. **3a** shows signals **P** from a magnetic sensor. FIG. **3b** shows conditioned signals **P'** corresponding to sensor signals **P**. FIG. **3c** shows sawtooth and averaged signals corresponding to sensor signals **P'**, resulting from frequency-to-voltage conversion procedures.

FIG. **4** shows an optical sensor device.

FIG. **5** shows a pulse-converter circuit for use in converting pulses to an analog voltage representative of frequency.

FIG. **6** shows a 30 Hz fundamental shaft rotation frequency modulated by a 78 Hz blade resonant frequency.

FIG. **7** shows a spectrum resulting from processing an analog voltage signal derived by frequency-voltage conversion.

FIG. **8** shows a spectrum resulting from processing conditioned pulses without a prior frequency-voltage conversion.

FIG. **9a** is a curve showing a set of resonant frequencies for new turbine blades, centering round 78 Hz. FIG. **9b** shows the hypothetical result of some corrosion of the blades and some cracking in a subset of the blades, resulting in both some decrease in all resonant frequencies and a greater shift for the subset, resulting in a shoulder forming on the curve. FIG. **9c** is a curve showing hypothetical progressive decrease in mean resonant frequency for a single resonant mode of a turbine stage.

FIG. **10** is a plot of resonant frequency data actually observed for a low-pressure steam turbine at an electric power plant.

FIG. **11** is a plot of the spectrum resulting from use of the so-called "real pan of $G(\omega',\omega_o)$" technique.

FIG. **12** is a flowchart for carrying out the real part of $G(\omega,\omega_o)$ technique.

*DETAILED DESCRIPTION OF PREFERRED EMBODIMENTS OF INVENTION*

I. *General Configuration of Apparatus*

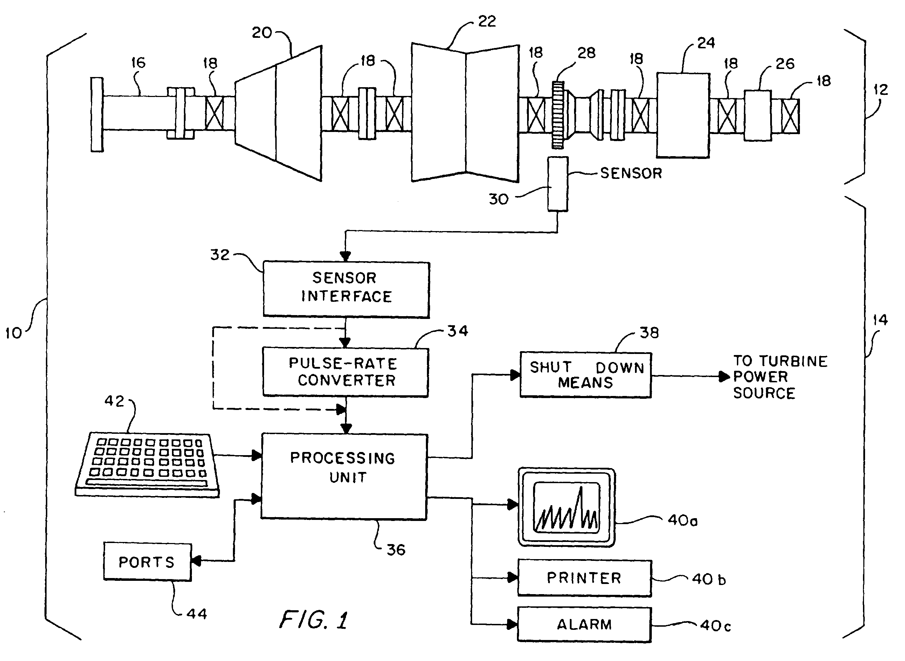

As shown in FIG. **1**, a rotating machinery system **10** includes electric power generation system **12** and control system **14**.

Steam is delivered to electric power generation system **12** from a steam source (not shown). System **12** comprises a main shaft **16**, mounted in bearings **18**. Low-pressure turbine **20**, high-pressure turbine **22**, generator **24**, and exciter **26** are connected on shaft **16**. A bull gear **28** is also mounted on shaft **16**. Bull gear **28** has N teeth. (A typical turbine shaft's bull gear has from 60 to 140 teeth.) The foregoing components of system **12** are conventional devices typically found on a turbine-generator set.

Control system **14** comprises sensor **30**, sensor interface **32**, pulse-rate converter **34**, processing unit **36**, and various units peripheral to processing unit **36**, which are described below. Sensor **30** provides a signal representative of shaft rotation rate, as described below in section II. That signal is conditioned and processed by sensor interface **32**, pulse-rate converter **34**, and processing unit **36** to provide resonance information--data about resonant vibration characteristics over time--for shaft **16** and turbine blades of turbine **22**, and to provide information about changes that occur in such data as described below in sections III-V.

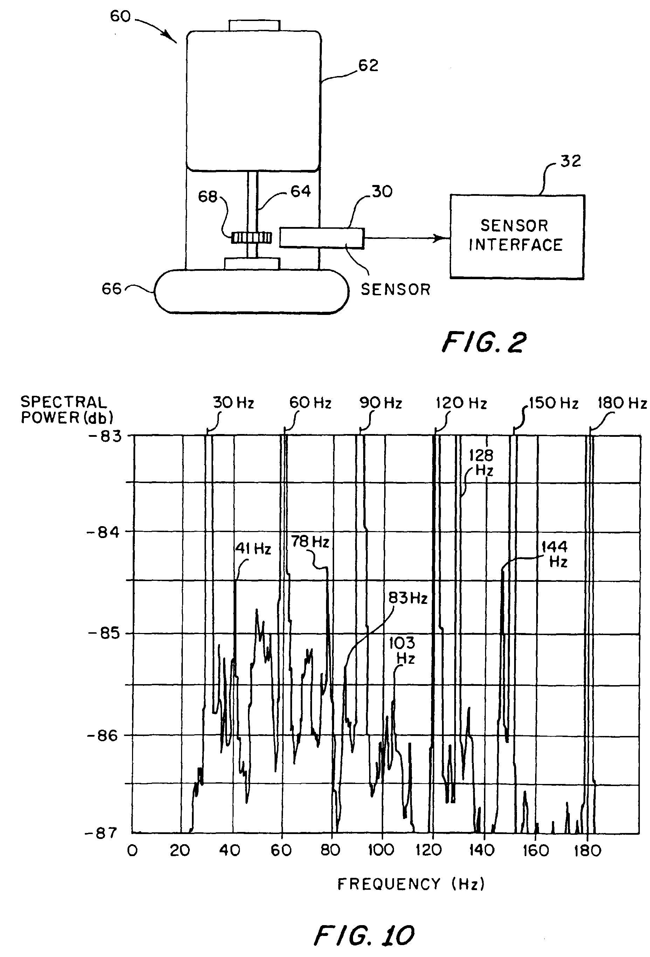

In FIG. **2**, an implementation is shown for providing resonance information primarily about the shaft of a vertical pump system (such as a coolant pump). Here pump system **60** comprises an electric motor **62**, having a shaft **64**, to which pump **66** is mounted. An encoder gear **68** is also mounted to shaft **64**, and it operates in a manner similar to bull gear **28** in FIG. **1**. Sensor **30** and sensor interface **32** cooperate with gear **68** in a like manner as that described above. The other parts of the system are not shown again in FIG. **2**, since they operate in the same manner as in FIG. **1**.

While the steam turbine system of FIG. **1** was described in terms of a horizontal shaft orientation, the invention is in no way restricted to such operation. The invention operates in the same way for a vertically-oriented turbine, and it is also suitable for use with hydraulic and gas turbines in the same manner as described for the steam turbine of FIG. **1**. The invention is also applicable to other types of rotating equipment having elements, such as propeller blades, helicopter rotors, and pump vanes, that may resonate.

As explained in greater detail below, turbine blades have resonant vibration modes and they oscillate as they rotate around their shaft axis. The oscillation alternately imparts and takes angular momentum from the shaft and thus the entire rotating system. When a blade imparts angular momentum to the system, the shaft speeds up slightly; when a blade takes angular momentum from the system, the shaft slows down slightly. The result is to vary the rate of angular rotation of the shaft by a slight amount, at the resonant frequencies of the blades. A like resonance effect occurs as a result of excitation of shaft torsional resonant modes. Indeed, the principle extends to any rotating system having components that can be excited in a resonant mode so that they oscillate and then impart angular momentum to, and take it from, the rest of the rotating system. The instrumentation and signal-processing apparatus of this invention uses the foregoing changes in rate of angular rotation to ascertain the resonant frequencies of the oscillating components of the rotating system, as explained below in the following sections of the specification.

The principal discussion herein is directed to machines (such as turbines and pumps) having rotating parts tat extend radially outward from a shaft and are rotated by it. However, the invention can be practiced with any rotating part that is attached to a shaft and imparts angular momentum to the shaft at resonant vibration frequencies of the part.

Thus, a disk or annular part attached to a shaft can modulate shaft rotation frequency by resonant vibrations of the part. Indeed, as pointed at in various places in this specification, the shaft itself has resonant frequencies (associated with torsional vibration) and its own oscillations modulate its rotation frequency at such frequencies. Thus, the invention is not restricted to radially extending machine components but instead comprehends any component that the shaft of a rotary machine rotates, and from which the shaft receives angular momentum at a resonant frequency of the component.

In addition, the invention extends to systems not having a conventional, longitudinally-continuous, cylindrical shaft. The system may have a camshaft, instead, in which the shaft is not straight but is zig-zagged or labyrinthine. Moreover, the system need not have a conventional shaft at all, as in the case of a pinwheel-like device, such as a radiometer, in which blades or rotors rotate round an axis to which they are not affixed. The basic defining characteristic of the rotating machines to which the invention is applicable is that the machine must have one or more components that can be excited to oscillate in one or more resonant modes, and that the oscillating component(s) must be able to impart angular momentum to the rotating system and withdraw it, in the course of such oscillations.

II. *Sensor*

Referring again to FIG. **1**, sensor **30** is preferably a magnetic transducer picking up the motion of the teeth of a steel gear as they pass the transducer. But the sensor may be implemented instead as a photoelectric detector or other optical sensing device, as a proximity (capacitance or eddy-current) detector, as a tachometer producing an output whose amplitude is proportional to shaft speed, or any other convenient means of detecting angular rotation frequency of shaft **16**. However, the sensor is preferably one capable of responding directly to shaft rotation rate. Thus, the inventors have not found it practical to use accelerometers or vibration pickups to measure modulation of shaft rotation rate by components rotated by the shaft, because they pick up too much noise from other vibrations in the system and this sensor output does not lend itself to practical extraction of instantaneous shaft rotation rate data.

*Bull-gear magnetic sensor*

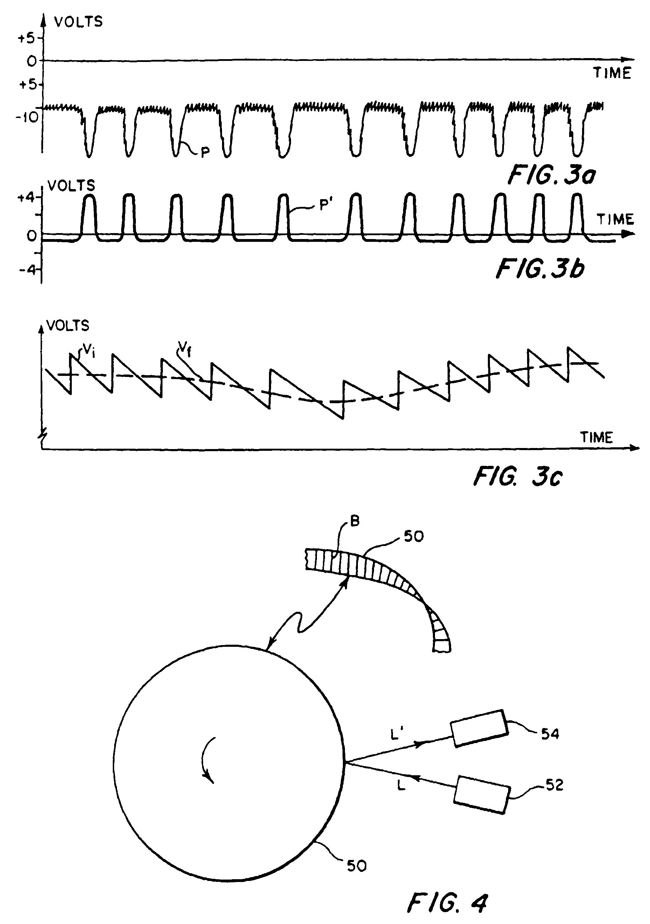

In the presently preferred magnetic transducer implementation of the sensor, as each of the **N** teeth of bull gear **28** passes sensor **30**, the tooth induces a "blip-like" signal (hereinafter referred to as a "pulse") representative of shaft rotation. Thus, each time a tooth passes, a pulse is generated that indicates that the shaft has rotated another approximately 360°/N. The pulses produced by sensor 30 are shown in FIG. **3a** as pulses **P**. As a practical matter, the teeth of a bull gear are not spaced at perfectly equal angular intervals, so that each pulse represents an increment of angular rotation that is (360°/N) ± x, where x is a small variation. These small variations give rise to spurious modulation signals ("interference") that appear in Fourier Transform spectrums as harmonics of the 30 Hz or other fundamental shaft rotation frequency. Such interference is reduced by signal-processing expedients discussed below.

Sensor interface **32** activates sensor **30** and conditions the analog signal output by filtering, amplification, and dc level-shifting. Interface **32** converts pulses **p** of FIG. **3a** to pulses **P'** of FIG. **3b**, which are "cleaned up" versions of pulses **P** of FIG. **3a**. Interface **30** is implemented by any of a number of conventional circuits, whose application here is obvious to persons of ordinary skill in circuit design. This circuitry eliminates noise and insures one and only pulse **P'** for one pulse **P**.

*Optical/magnetic tape sensor*

As indicated above, other forms of sensor can be used in practicing the invention, and the invention is not limited to use with the magnetic sensor described above. For example, as shown in FIG. **4**, a tape **50** having reflecting bands **B** at regular intervals can be epoxied or otherwise affixed to the main shaft of the turbine with bands **B** parallel to the axis of the shaft. A laser or light beam **52** then interrogates tape **50** with pulses **L**. The light frequency may be visible, UV, or IR. Pulses **L** are reflected off bands **B** of tape **50** as pulses **L'** and are received by receiver **54**. (It is preferable that tape **50** have approximately the same thermal coefficient of expansion as the shaft to which it is affixed, so that it will not deform, thereby introducing a noise signal.)

Tape **50** may instead be magnetically "marked," that is, have small magnetic zones affixed thereto, so that the tape can actuate a magnetic sensor. The magnetic-sensor approach has the advantage of being less sensitive to the presence of grease and dirt than an optical sensor. Both the optical and magnetic band approaches are advantageous when a bull gear is not available at a desired shaft location or when a number of pulses per rotation is desired that differs from the number of teeth on the gear.

*Nyquist constraint*

A constraint on selection of pulse-producing sensors should be noted. The kind of signal processing and analysis used in the invention, described below, calls for a sampling rate for the parameter being measured (shaft rotation frequency as modulated by resonant-mode frequencies of shaft and blades) that is well in excess of the highest frequency of interest. Monitoring of large steam-turbine blades requires detection of shaft-speed modulations up to 200 Hz or higher. An 80-tooth bull gear provides 2400 pulses per sec (80 teeth × 30 Hz). According to the Nyquist Theorem, that 2400 pulses/sec allows analysis of modulation signals up to 1200 Hz. The integration time constant of the frequency-to-voltage converter used here (described below) reduces this frequency to the 400 to 600 Hz range. That is two to three times the frequencies required (200 Hz) for large steam-turbine blades, so that there is no problem. However, this factor would have to be taken into account in selecting sensor implementations for other rotating machines having different frequencies of interest.

*AC-output detector*

In principle, the modulation of angular rotation frequency of the shaft induced by turbine blade oscillations could be extracted from the 60 Hz output of generator **24**. However, by that stage of the system, the modulating-frequency components induced by blade resonance have been greatly filtered out to very low signal levels by mechanical and other filtering elements in the system. Nevertheless, use of demodulation of AC output from a turbine-generator set, or an equivalent signal, is considered within the scope of the invention.

Thus, an approximately 60 Hz signal can be taken from generator **24**. (An electric power generator operates at too high a voltage to be used directly, and must be stepped down for the present purpose. Typically, power alternators have associated with them step-down transformers that provide low-voltage signals.) That provides a signal representative of instantaneous shaft rotation-frequency, which includes signals representative of modulation of shaft rotation-frequency caused by resonant oscillations of the shaft or other rotating elements. The difference between that frequency and exactly 60 Hz represents the signal of interest. The difference signal of interest can be obtained by any of several conventional processing signal-techniques based on signal phase comparison with reference signals and the extraction of instantaneous frequency measurements.

The foregoing sensors are referred to as providing signals "representative of angular rotation" of the shaft of a rotary machine. That concept is intended to include provision of signals indicative of absolute value of shaft rotation rate *or* change in shaft rotation rate, and also to include absolute value of shaft angle *or* change in shaft angle. Thus, to monitor modulations in shaft rotation rate caused by vibration resonances of parts such as turbine blades and shafts, it may not be necessary to determine whether the shaft is rotating at 30 Hz or 31 Hz. What needs to be measured is the *modulation*, for that is what is indicative of the vibration resonances of interest. Hence, a sensor that is capable of accurately picking up changes in shaft rotation frequency can be effective for purposes of the invention irrespective of whether the sensor is capable of accurately picking up absolute shaft rotation frequency. By the same token, sensors useful for practicing the invention may accurately read changes in shaft angle without also accurately reading absolute shaft angle.

If the application warrants, additional sensors and shaft elements to cooperate with them may be retrofitted to other shaft positions along the shaft axis, which may provide enhanced sensitivity for measuring the resonant frequencies of interest. The inventors consider this expedient a matter of design choice and not a part of the invention.

III. *Demodulation*

The inventors' preferred embodiment for determining instantaneous frequency of shaft rotation is the pulse-rate converter described below. However, instantaneous frequency can be determined simply by feeding the pulses to a high-speed counter and resetting it at each pulse. If there were no modulation of the 30 Hz shaft rotation-frequency or variation in intertooth spacing, the time between pulses would be a uniform $^1/_{30} \times ^1/_N$ sec, where N is the number of teeth on the bull gear. Thus, an 80-tooth bull gear produces 2400 pulses per second, with a time of 1/2400 sec = 417 microsec between pulses. That figure may be considered a reference elapsed time, from which elapsed time representative of changes in instantaneous frequency reflecting blade resonances will differ by nanoseconds. That difference time can be converted into a signal which is subjected to Fourier Transform analysis to provide resonance information. However, it will be appreciated that a very high-speed counter is needed to obtain useful information. Accordingly, the following circuitry is considered preferable.

*Pulse-Rate Converter*

The output of sensor interface **32** (see FIG. **3b**) is fed to pulse-rate converter **34**. The function of converter **34** is to convert the cleaned up pulses of FIG. **3b** to a voltage representative of pulse frequency. The specific pulse-race converter circuit now described is designed for a system with the following parameters, but the circuitry may readily be adapted to other systems by persons of ordinary skill in designing circuits.

For a typical 80-tooth bull gear and 30 Hz turbine-generator, the pulse repetition rate is $80 \times 30 = 2400$ Hz. The resonant frequencies of interest are from approximately 10 Hz to 150 or 200 Hz. (For the specific steam turbine for whose testing this particular pulse-rate converter circuit was designed, the lowest frequency of interest was 19 Hz and the highest was approximately 150 Hz.) The main modulating frequencies of interest are those due to the lower-frequency excitation modes of the large blades of the turbine. They generally may occur in the range from 60 Hz to 200 Hz; under normal operating conditions, they can modulate the 30 Hz fundamental of the system in the range of $30 \pm 0.0005$ Hz. Also of interest are lower-mode turbine-shaft torsional resonant frequencies generally occurring in the range from 10 Hz to 40 Hz.

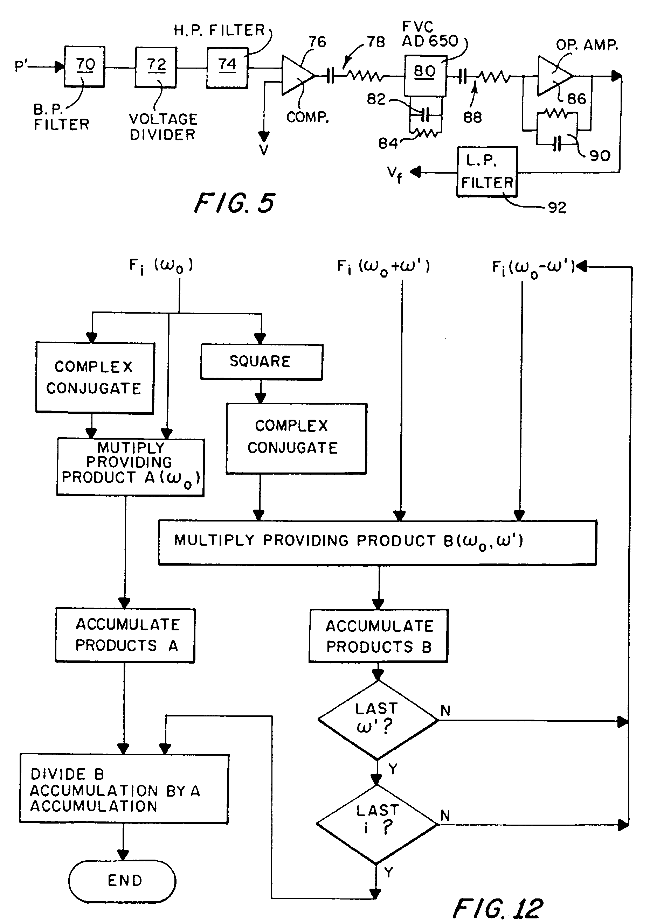

FIG. **5** provides a detail drawing of pulse-rate converter **34** of FIG. **1**. The output of sensor interface **32** is fed to the input of converter **34**, which processes, integrates, and filters signals representative of occurrences of pulses **P** and **P'**. The output of converter **34** is a dc-shifted signal whose amplitude is linearly proportional to pulse frequency, and thus linearly proportional to instantaneous rotation frequency of the turbine shaft. Converter **34** thus provides an output voltage $V_f$, which is proportional to the frequency of pulses **P** and **P'**. FIG. **3c** shows a voltage $V_i$ representative of an integral of pulses **P'**, and a dotted line which is a moving-time average of $V_i$, provided by appropriately filtering it to provide filtered output signal $V_f$. The details of this procedure are now described.

As shown in FIG. **5**, cleaned up pulses **P'** of FIG. **3b** are fed to a bandpass filter **70**, having a 0.1 Hz to 10 KHz pass band. Filter **70** removes the dc component of the input signal and attenuates high frequencies. The output of filter **70** is fed to voltage divider **72**, which further attenuates the signal, for example, by a 1:2 factor.

The signal is then fed to 20 Hz 4-pole high-pass filter **74**. The output of filter **74** is fed to an operational amplifier **76**, configured as a comparator having a predetermined voltage **V** (for example, 0.5 v) for threshold/reference adjustment. When a pulse input to operational amplifier/comparator **76** exceeds the threshold/reference voltage level, operational amplifier/comparator **76** changes its output state from 0 v to 5 v.

The output of operational amplifier/comparator **76** is delivered to capacitor-resistor combination **78**, which removes the dc component and passes higher frequencies. Appropriate values for capacitor-resistor combination **78** are 270 pf and 4.7 K.

Capacitor-resistor combination **78** passes a positive spike to a frequency-to-voltage converter (FVC) **80** at the beginning of a pulse **P'**. FVC **76** is conveniently an Analog Devices AD650 chip. Each time a positive pulse triggers the AD650 chip, it provides a current pulse of predetermined duration and amplitude to an integrating capacitor **82**. The AD650 chip ignores negative inputs, so that it does not respond to the negative spike caused by the trailing edge of the pulse output from comparator **76**.

Capacitor **82** integrates the current pulses in accordance with the formula

$$V = (1/C) \times \int i \, dt = Q/C,$$

where **C** is the value of capacitor **82**. The AD650 chip used here as FVC **80** has a calibration resistor **84** connected across capacitor **82**. Resistor **84** is used to adjust the output of the AD650 chip to a desired full scale value. Here it is desired that full-scale voltage be 10 v for a pulse-repetition rate of 2400 per second. A convenient value for resistor **84** is 220 K in series with a 50 K pot.

The output of FVC **80** is a voltage $V_1$ shown in **FIG. 3c**, a series of triangle waves whose frequency is the frequency of pulses **P** and **P'**. The integrating side of the triangle is very steep, but the leakage or decay side is much less steep, as a result of the time constants associated with charge and discharge of capacitor **82**. The height and width increments for the steep side of the triangle are always the same ($V=Q/C$). But the height and width increments of the descending side of the triangle vary in accordance with pulse spacing (or, equivalently, instantaneous pulse frequency), since the descending side is an exponential decay function dependent on how much time elapses until the next current pulse occurs.

The output of FVC **80** is fed to an operational amplifier **86** via a series resistor-capacitor combination **88**, which removes dc. Appropriate values for series resistor-capacitor combination **88** are 10 K and 1 µf. Operational amplifier **86** has as a feedback loop a parallel resistor-capacitor combination **90**, 10 K and 22 nf, providing unity gain at low frequency and attenuation at higher frequencies. Resistor-capacitor combination **90** thus acts as a prefilter for low-pass filter **92**, to which the output of operational amplifier **86** is next fed.

Filter **92** is a 150 Hz 8-pole low-pass filter. The smoothed (averaged) output voltage $V_f$ (shown as a dotted line in **FIG. 3c**) from filter **92** is then fed to processing unit **36**, as described above. The 150 Hz filter was inserted for anti-aliasing purposes before sending the signal to an analog-to-digital converter. The 150 Hz cutoff value was selected to eliminate frequencies above 150 Hz, because they were of little interest in the case of the turbine that this unit was designed to test. If frequencies, for example, of up to 200 Hz were of interest, it would be necessary to raise the cutoff

7

frequency of filter **92** to accommodate them.

Voltage $V_f$ is an analog signal whose instantaneous value is representative of the rate of shaft rotation. The rate is, in the system described above, 30 Hz ± small modulations occurring at various frequencies. As stated earlier, the main modulating frequencies of interest for large low-pressure turbine blades is in the range 60 Hz to 150 or 200 Hz, of amplitude approximately ± 0.0005 Hz. Shaft torsional resonance modulation of a frequency in the range from 10 Hz to 40 Hz may accompany such blade resonance. The frequencies of interest occur in the presence both of considerable noise and of harmonics of 30 Hz.

As indicated previously, the sensor described above updates the value of instantaneous frequency approximately 2400 times per second (30 Hz $\times$ 80 teeth). Such signal information is appropriate for detection of signals up to 1200 Hz, based on the Nyquist Theorem. But the time constants of the foregoing demodulation circuit reduce the 1200 Hz figure to an effective 400 Hz to cut-off frequency; that value is nonetheless well in excess of the 60-200 Hz frequencies of interest for large steam-turbine blades. How to adapt the foregoing circuitry to different frequencies of interest is obvious to persons skilled in design of electronic circuits.

*Direct use of pulses*

As an alternative to providing analog signal $V_f$, pulses **P** may simply be conditioned and fed to processing unit **36**. In this approach, no frequency-to-voltage conversion preprocessing step occurs. However, the pulses may first be conditioned to remove noise. This is done by conventional means.

In either case the pulses or signal $V_f$ must be processed within processing unit **36** to extract from the concomitant noise and harmonics the signals of interest which are induced by modulation of the 30 Hz shaft rotation rate by blade and shaft resonant frequencies.

IV. *Processing Unit*

The signals provided by the above means are fed to processing unit **36**. Processing unit **36** extracts the resonant-frequency signals of interest from noise including shaft rotation-frequency harmonics, as described below in section V. In addition, processing unit **36** analyzes data concerning the resonant-frequency signals of interest in accordance with procedures described below in section VII.

This method is conveniently implemented with an IBM PC-386 personal computer, based on an 80386 microprocessor chip, as a processing unit. However, a one-board microcomputer as a commercial standalone unit, or other microprocessor or microcontroller chips, may be used, instead, depending on design and commercial considerations. The invention is not limited to implementation with any particular processing unit.

*Peripherals*

Processing unit **36** is optionally connected to a variety of peripheral units. When the invention is used simply to measure resonance information for a component, the peripherals are used just to provide that information. When the invention is used to determine whether changes in resonant vibration characteristics are occurring that indicate prospective failure of a component, the peripherals are used not only to generate reports or provide information, but also to alert operators or control-room personnel by visual and/or auditory means, and also in some applications to shut down the equipment before a failure occurs.

Referring to **FIG. 1**, shutdown means **38** shuts rotating machine **12** down when processing unit **36** detects an imminent failure, such as a blade or shaft fracture. When processing unit **36** detects such prospective catastrophic failure condition, by means described below, unit **36** sends a shutdown signal to shutdown means **38**. Shutdown means **38** then shuts system **12** down, by stopping power delivery thereto, for example, by shutting off steam delivery to the turbines and/or venting steam therefrom. Preferably, this is accomplished in an orderly manner, following a predetermined shutdown routine. In the case of a device driven by an electric motor, such as the pump of **FIG. 2**, the shutdown means open the electrical power input line to the device.

In the present state of the art, it is believed that the management of electric power generation facilities will be unwilling to permit automatic shutdown of steam turbines simply because a computer device indicates that shutdown is appropriate. (That is not necessarily true in other applications of the invention.) Accordingly, it is presently contemplated that a shutdown alarm signal will be provided, and that an engineer will then examine the data on which the alarm signal was generated in order to determine whether he agrees that such data warrant a shutdown. The inventors contemplate that as this invention proves itself in the industry, and as more experience is gained wit resonance information indicative of an impending catastrophic failure, it will become acceptable to the industry to operate in an automatic shutdown mode. Accordingly, the invention comprehends both alarm and shutdown modes of operation. Monitor **40a** conveniently displays waveforms, spectrums, and/or historical data, such as a skewness of a resonant frequency round its mean, kurtosis of a resonant frequency about its mean, and formation of secondary resonance peaks (discussed in section VII-B). Such data is provided by processing unit **36**. Printer **40b** prints data and other information provided by unit **36**. Alarm **40c** is a visual or auditory adjunct to, or substitute for, shutdown means **38**. Keyboard **42** is a convenient means for inputting additional information to unit **38**, commanding reports, or otherwise directing task performance. Ports **44** provide unit **36** with additional input and output of information.

*Spectrum analyzer implementation*

A simplified implementation of the invention dispenses with the elaborate signal-processing procedures described below and with the processing unit that carries them out. Instead, a commercially available, off-the-shelf spectrum analyzer (such as the Zonic A/D 3525 Dual Channel FFT Analyzer) is used to observe the signals described earlier.

This approach provides spectral information of the kind described below, so that at least some of the resonant frequencies of interest can be observed. This approach allows elimination of interference by shaft harmonic frequencies, when synchronous techniques described below (section V-B) are utilized through additional external electronic circuitry. This approach also allows use of "zoom analysis" to obtain high resolution of spectral resonance frequencies of interest. However, this approach does not permit use of the below-described special noise-elimination techniques, trend analysis, and automatic alarm and shutdown expedients. It is therefore not contemplated as a preferred embodiment, but rather just as a convenient portable diagnostic device.

V. *Signal Processing*

The procedures for signal processing that are involved here may advantageously be illustrated with reference to signals induced by vibration of turbine blades. A typical large-turbine blades rotates at 30 or 60 Hz, and my be 1,2 m (4 feet) long, weighing 18 kg (40 pounds). A single stage of a steam turbine typically comprises 60 to 140 such blades. In normal operation, hydrodynamic forces may deflect the individual blade-tips $\pm 2,5\ \mu m$ ($\pm 0.0001$ inches) at a principal mean resonant frequency (for example, 78 Hz). The blade thus oscillates slightly at that frequency around its point of attachment to the shaft. As a result there is an alternating positive and negative transfer of angular momentum from the blade to the shaft and thus to the entire rotating system. This alternating plus and minus transfer of momentum modulates the shaft rotation frequency. The amplitude of such modulation is related to the ratio of the blade angular momentum to the angular momentum of the entire rotary system (turbine, generator, etc.).

The frequency of angular rotation of the shaft has a 30 Hz main component, which is modulated, in this example, by an 78 Hz component (among others). The 60 to 140 blades of a stage are very similar in size and shape, and typically have resonant frequencies within a $\pm 2$ Hz bandwidth of a mean resonant frequency for the set of blades. Subsets of these blades (for example, 5 to 10) may be mechanically connected to form groups of blades; that has the result of causing such groups to have group resonant vibration characteristics, which the system of this invention also monitors.

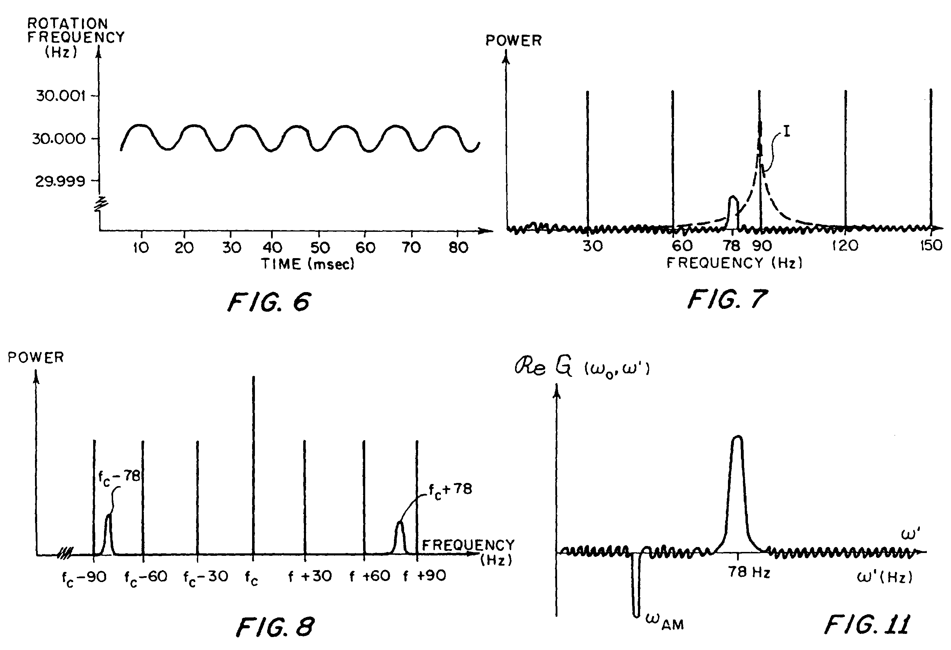

**FIG. 6** illustrates these effects, based on the inventors' theoretical calculations and their empirical observations discussed below. It is seen that a very small-amplitude 78 Hz sine wave modulates the 30 Hz shaft-rotation frequency. The result is a rotation frequency swing from approximately 29.9998 Hz to 30.0002 Hz. Using a bull-gear encoder of the type previously described involves a 2400 pulse/sec signal. The modulation described places a several nanosecond (for example, 5 nsec) variation in pulse spacing in a pulse train having an approximately 420 microsecond interval between pulses. That is the type of signal that must be extracted from the sensor signals and accompanying noise, to detect these resonant frequencies. Furthermore, to measure small changes in such resonant frequencies involves even smaller signal-to-noise ratios.

A significant amount of interference occurs at harmonics of the fundamental frequency-30 Hz. These interfering modulations, which are much greater in amplitude than the modulations of interest, are unavoidable artifacts of the system. For example, bull gear **28** will typically have variations in the spacing of its **N** gear teeth. The effect of this repeats every rotation, so that there is an apparent (but nonexistent) rotational speed variation based on 30 Hz and its harmonics. Other imbalances, misalignments, and loads in the rotating system will create variations in shaft rotational rate and repeat for each rotation. (The foregoing statements concerned a machine with a 30 Hz fundamental. A machine having a 60 Hz fundamental has harmonics that are multiples of 60 Hz rather than of 30 Hz.)

The basic tool that the inventors have used to extract signals of interest from the interference found in the sensor signals has been the Fourier Transform. Implementations are described below using both Fast Fourier Transform (FFT) and Discrete Fourier Transform (DFT).

As previously indicated, pulse-rate converter **34** provides a demodulated output voltage signal representative of pulse frequency; alternatively, the pulses are used directly after conditioning them. Whether the pulses are used directly or after frequency-to-voltage conversion by pulse-rate convener **34**, the pulses may be subjected to either FFT or DFT analysis and the results may be examined. This approach leads to data such as that shown in **FIG. 10**, in which there is a great deal of off-scale modulation shown at n × 30 Hz, where n = 1, 2, 3 . . . .

Instead and preferably, whether the pulses are used directly or after frequency-to-voltage conversion by pulse-rate converter **34**, the pulses are then subjected to a DFT or FFT analysis in which special measures are taken to eliminate harmonic interference. These interference-removal techniques are based on a principle that the FFT or DFT analysis of signals depends on the choice of frequency points at which shaft-rotation frequency amplitudes are observed. A typical FFT or DFT analysis ascertains frequency amplitudes at a given number of spectral frequencies, which are spaced from one another by predetermined frequency intervals. The selected spectral frequencies are sometimes referred to as "spectral bins," but it should be understood that a Fourier Transform spectrum analyzer provides signals representative of amplitude and phase at a series of predetermined discrete data points, such as exact 30 Hz, rather than amplitudes and phases associated with some range such as 30 Hz ± 0.001 Hz.

When a signal of particular frequency interferes with observation of a frequency of interest, it is important whether the interfering frequency coincides with one of the predetermined FFT or DFT spectral frequencies. For example, in this case 30 Hz is an interfering frequency. If there is a spectral frequency of exactly 30 Hz in the DFT or FFT, all of the 30 Hz signal will be registered at that location. But if spectral frequencies occur instead at other values, such as 29.5 Hz and 30.5 Hz rather than 30 Hz, the 30 Hz interference signal will "leak" or be smeared over or among many adjacent spectral bins along the frequency axis. The amplitude of the leakage diminishes as a function of frequency difference from the interfering frequency value (here, 30 Hz). Such smearing is particularly evident at the lower power levels that characterize the shaft-rotation-modulating frequencies of interest here.

An important element of the techniques used in this invention (described below) is therefore that, to eliminate the foregoing interference, the Fourier Transform spectral frequencies must be made to coincide with the dominant interfering frequencies. Here, that is the 30 Hz shaft rotation frequency being modulated and its harmonics (such as 60, 90, 120, and 150 Hz).

A first technique for removing harmonic interference, wed with DFT analysis is described (Section A, below). Then such techniques for use with FFT analysis are described (Section B, below). Direct analysis of the encoder pulse train, without frequency-to-voltage conversion, is next described (section C, below). An extremely effective technique for removing other sources of interference is last described (Section D, below).

A. *Interference Reduction - DFT Technique Using F/V Converter*

Converter **34** provides a voltage whose amplitude is proportional to instantaneous frequency. The voltage is then converted to a digital signal by a conventional analog-to-digital converter (ADC) that is clocked with the pulses **P'**. Pulses **P'** are used to clock the ADC in order to permit the length of the data record that the ADC uses for analog-to-digital conversion to be set at an integral multiple of **N**, where **N** is the number of teeth on the bull gear and thus the number of pulses occurring per complete shaft rotation. The data is acquired from M shaft rotations for the DFT analysis, so that the data record length is N × M. (For example, for a 120-tooth bull gear, and a value of M = 100, number pulses in data record = N × M = 12,000. That means that the data record contains data for 100 complete shaft rotations. That is 3.33 sec.)

Since pulses **P'** are at approximately 2400 Hz, the ADC is sampled at a much higher rate than necessary to satisfy the requirements of the Nyquist Theorem. Here, the highest frequency of interest is approximately 200 Hz. Hence, a sample of 600 Hz is more than adequate. Accordingly, the inventors prefer to feed pulses **P'** to a conventional divide-by-4 circuit before using the pulse train to clock the ADC. That permits use of less computational resources.

The data record is then subjected to a DFT analysis. Because the user is free to set the data record to be N × M pulses long for DFT analysis, these bins will necessarily include 30 Hz, 60 Hz, 90 Hz . . . . That occurs because, in a Fourier Transform, the lowest spectral frequency corresponds to one complete cycle with a period equal to the time for N × M sensor pulses. Therefore, a data record from N × M sensor pulses contains data from **M** complete shaft rotations. Thus, the 30 Hz fundamental frequency is found at the *M*th spectral frequency, the next harmonic (60 Hz) is found in the 2*M*th spectral frequency, the next harmonic (90 Hz) is at the 3*M*th spectral frequency ... and the last harmonic registered is at spectral frequency N × M/2. Thus, if a data record contains 10 data segments, and N = 120, 30 Hz will be at the 10th spectral frequency, 60 Hz at the 20th, 90 Hz at the 30th, ... and 1800 Hz at the 600th spectral frequency. (These counts omit the zero spectral frequency.)

The result of the foregoing procedure is to identify a series of spectral lines, as shown in **FIG. 7**. A moderate peak is shown at 78 Hz, the resonant frequency of the turbine blades for this example. Higher peaks are shown at 30, 60, 90, 120, and 150 Hz. These represent the 30 Hz fundamental of the system and its harmonics. Shown as a dotted line **I** in **FIG. 7** is a representation of the leakage (interference) that would occur at each of the shaft-rate harmonic frequencies if spectral frequencies did not coincide with 30 and its multiples.

The peak at 78 Hz is not a line at a single spectral frequency, as the harmonics are, for several reasons. First, blade resonance is not a frequency in step with shaft rotation, as the harmonics are. Hence, the foregoing procedure cannot confine the signal to one spectral frequency. Second, there is not a single blade fundamental resonant frequency, but rather a different fundamental resonant frequency for each of 60 to 100 blades for a turbine stage. These are distributed around a mean fundamental resonant frequency, for example, 78 Hz ± 2 Hz.

B. *Interference Reduction - FFT Technique Using F/V Converter*

The FFT, unlike the DFT, does not permit an arbitrary selection of the number of points in a data record. The number must be a power of 2, such as 512 or 1024 (which are two convenient values). To achieve a nulling effect similar to that described in the preceding section, the data record must have two characteristics. First, the data record must include a number of shaft rotations equal to an integral power of two; second, the number of data points read per shaft rotation (i.e., number of data points in each data segment) must be also be an integral power of two.

Convener **34** provides a voltage $V_f$ whose amplitude is proportional to instantaneous frequency. Over an interval of 1/30 sec, one complete shaft rotation occurs. That interval (data segment) can be divided up for ADC purposes in any predetermined way; the number of intervals within the data segment does not have to be the same as the number of pulses from which $V_f$ was originally derived. At every moment, there is available at the output of converter **34** an analog voltage $V_f$ that is representative of the value of instantaneous shaft-rotation frequency at that time. Every moment is a possible data point. Accordingly, the processing unit can direct the ADC to read (sample) the analog voltage $V_f$ at whatever intervals or data points are desired.

Thus, the number of data points at which $V_f$ is read during each 1/30 sec interval (data segment) can be 128, 256, or any other convenient number. (However, the number should be at least high enough to meet the Nyquist criterion that sampling rate must be at least twice the highest frequency of interest).

Here, we assume a 100-tooth bull gear, producing 100 sensor pulses per shaft rotation. A number of data points per shaft rotation equal to a power of two -in this example, 128-is provided by means next described. Accordingly, every data segment containing data from **N** pulses (here, 100 pulses), comprising data from one complete shaft rotation, shall be divided into a number of points at which $V_f$ is read. The number is to be an integral power of 2, such as 128. Thus the frequency-to-voltage converter output from 100 sensor pulses provides a varying $V_f$ value over a 1/30 sec interval. The value of $V_f$ is sampled 128 times for analog-to-digital conversion, because the ADC clock is enabled 128 times during the interval in which 100 sensor pulses occur.

The 128 clock pulses for every 100 sensor pulses are provided as follows. First **N** pulses **P'** are fed to a conventional computer-controlled phase-lock-loop pulse multiplier-and-divider circuit. (That circuit is conveniently implemented with a Motorola MC14046B chip, which contains a phase comparator and voltage-controlled oscillator (VCO).) The **N** pulses provide an approximately 1/30 sec interval representative of one complete rotation of the shaft.

The **N** sensor pulses are fed to one input of the phase comparator circuit of the chip. The VCO output is fed back to another input of the phase comparator circuit, via a divide-by-n counter. Dividing by **n** in the feedback loop has the result of making the main circuit multiply by **n**, so that the output is a pulse train of **n** times the input frequency. Here **n** is to be 128. The pulse train is then divided by **N**, so that the final output pulse train has 128 pulses during every complete 360°-rotation of the shaft. (It would have been equally feasible to obtain 128 pulses per shaft rotation by multiplying by 32 and dividing by 25, since **N**, here 100, is $25 \times 2^2$. Thus, the procedure may be generalized in terms of multiplying by a first factor and dividing by a second factor, where the first and second factors have a relationship such that the final result is an integral power of two. The second factor is **N** divided by the highest power-of-two factor in **N**; the first factor is the quotient of the desired power of two divided by the foregoing highest power-of-two factor of **N**.)

Thus, the result is a pulse train of 128 clock pulses during an interval (data segment) in which the sensor produces 100 data pulses. These 128 pulses are then used to clock the analog-to-digital converter convening $V_f$ to digital format.

The data segments are then accumulated for a number of shaft rotations equal to an additional power of two (for example, 8 or 16), so that the resulting data record contains a number of data points equal to an integral power of two. The data record is then subjected to FFT analysis. The result is a spectrum similar to that provided by DFT analysis, as described previously, and illustrated in **FIG. 7**.

C. *Direct Use of Pulses: Spectral Analysis Independent Time Sampling*

The foregoing procedure used as the voltage input for ADC the analog output $V_f$ from convener **34**. Pulses **P'** can instead be digitized directly after having been passed through a low-pass, antialiasing filter having a cutoff frequency set at less than half the sample rate. The digital sampling rate is controlled by the internal clock of a computer. The data record is then subjected to a DFT or FFT analysis. The result of the foregoing procedure is to identify a series of spectral lines centering round $f_c$, where that is the pulse rare per second (for example, approximately 2400 for a bull gear encoder of 80 teeth). That center-frequency $f_c$ is modulated by other frequencies. The principal spectral line is at $f_c$, which is flanked by principal sidebands at frequencies $f_c \pm 30$, $f_c \pm 60$, $f_c \pm 90$, etc. These are the 30 Hz fundamental and its harmonics, as above. In addition, there are two smaller sidebands of $f_c \pm 78$, representing the resonant frequency of interest.

*Synchronous Pulse-Controlled Time Sampling*

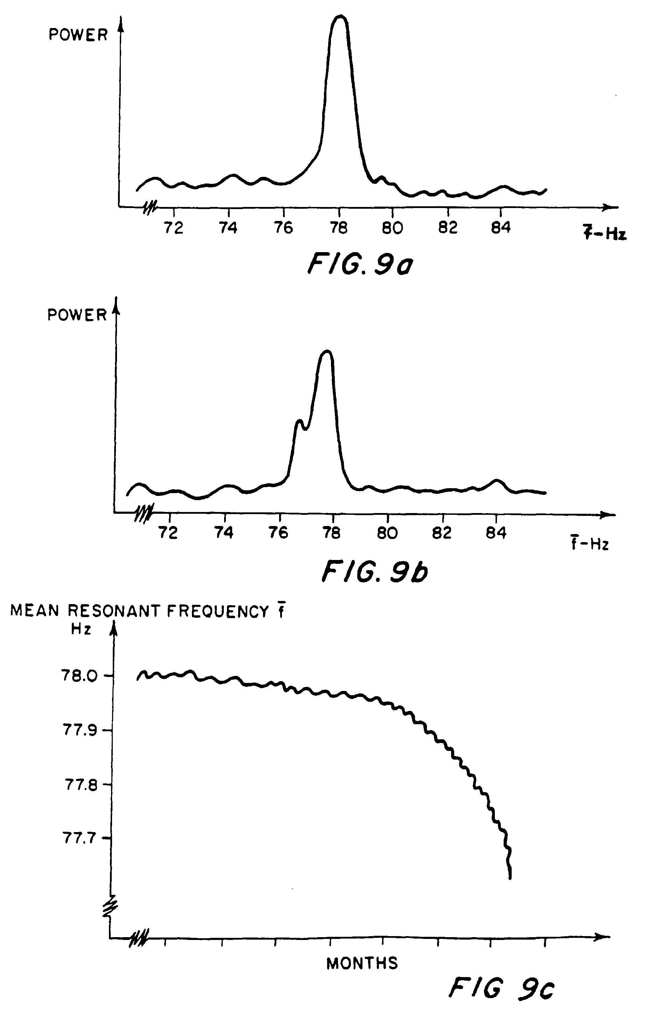

Elimination of interference by the shaft harmonic frequencies, when direct pulse analysis is performed, can be accomplished by using a modified form of the techniques described in section A and B, above. The interference lines can be made to fall exactly on spectral frequencies by using the pulses to control the analog-to-digital converter. The result is a spectrum illustrated in **FIG. 8**. The harmonic interference lines appear at the center frequency (for example, 2400 Hz) $\pm$ multiples of 30 Hz. The modulating frequencies of interest $f_m$. In the present example, the lowest frequency of interest is 19 Hz, the shaft torsional-vibration fundamental resonant frequency (not shown in **FIG. 8**). As in **FIG.7**, the harmonics are lines confined to single spectral frequencies but the frequencies of interest are nor (for the reasons previously stated).

The encoder pulses used to control the clock of the analog-to-digital converter must first be processed to provide a further pulse train satisfying Nyquist Theorem requirements and avoiding aliasing. That is done by multiplying the pulse repetition rate by at least 3. In addition, the pulse spacings must not be modulated at frequencies greater than that of the lowest modulating frequency of interest (in this example, 19 Hz). If such modulation of clock spacings occurs, the spacings of the clock pulse signal will be in step with those of the encoder pulse signal to be digitized. That will tend to null out the modulation information sought to be detected by the signal processing. Hence, the clock signal must be passed through a bandpass filter with appropriate cutoff frequency. It is considered that 10 Hz is sufficiently below 19 Hz for purposes of this constraint. Therefore, the low-pass filter should have a 10 Hz cutoff frequency.

The foregoing clocking scheme is effectuated by feeding the pulse train to phase-lock-loop voltage-controlled oscillator pulse-multiplier circuit similar to that previously described, using the same Motorola MC14046B chip. Here, the pulse train is fed to one input port of the multiplier (which is one input of a phase comparator). The output of the comparator is fed to a 10 Hz low-pass filter. The filter output is fed to the VCO unit of the chip. The output of the VCO is fed to a conventional divide-by-3 circuit, and the resulting output is fed to the other input port of the comparator. (As previously indicated, 3 was selected as the multiplier factor to satisfy the requirement of the Nyquist Theorem of at least 2 samples per pulse.) The result of the feedback is to make the VCO operate at 7200 Hz, so that its output when divided by 3 and fed to one input port of the phase comparator will approximate the 2400 Hz pulse input fed to the other input port. The 7200 Hz pulse train is used to clock the analog-to-digital converter. This 7200 Hz pulse train has pulse spacings based on the average of the last 0.1 sec of input pulses, due to the 10 Hz low-pass filter. That 0.1 sec interval represents 240 pulses, or 3 complete shaft rotations. Pulse spacing modulations at frequencies greater than 10 Hz do not appear in the clock signal, because of the 10 Hz low-pass filtering.

The resulting pulse train is then used to clock an analog-to-digital converter, which receives as analog signal input the same pulse train that was fed to the Motorola MC14046B chip. However, that pulse train should first be passed through an anti-aliasing filter before being used as an ADC analog signal input. The anti-aliasing filter is a low-pass filter whose cutoff frequency meets two constraints: (1) it must be less than half the sampling rate; (2) it must exceed the highest sideband of interest. If these constraints are not satisfied, some information can be lost.

Here the fundamental pulse train frequency is 7200 Hz. Half that is 3600 Hz. The highest sideband of interest is at 2400 Hz + 150 to 200 Hz. Thus 2800 Hz is an appropriate value for the cut-off frequency of the anti-aliasing low-pass filter. (It is also seen that multiplying 2400 by 3 in the Motorola MC14046B chip, rather than just by 2, was useful because it avoided losing the upper sidebands.)

The ADC output is a series of digital signals representative of instantaneous shaft rotation frequency. These signals are then subjected to the above-described procedures (sections A and B), in the same manner as was the output of the frequency-to-voltage convener **34**, to remove interference at harmonics of shaft rotation frequency while providing a DFT and FFT spectrum. (This requires, for example, making the length of the data record exactly an integral number of shaft rotations.)

D. *Direct Use of Pulses: Real Part of $G(\omega', \omega_o)$ Technique*

The inventors have found particularly advantageous an interference-rejection technique for direct analysis of pulses. This technique differs from the DFT and FFT techniques described above in that it additionally rejects interference originating from amplitude variations in pulses as well as interference from other sources of background noise. Hence, this new procedure is effective to reject general interference from sources that do not modulate the shaft-rotation frequency but nonetheless contaminate the modulation signal. As stated above, this procedure also rejects interference due to pulse amplitude modulation.

As a first step, the DFT or FFT procedure of preceding section **C** is carried out using pulses **P'** directly. The result is an array of complex numbers $F_i(\omega)$, which are determined for each spectral frequency of the DFT or FFT, where

$\omega$ (omega) is angular frequency in radians/sec for the particular spectral frequency. The procedure is carried out **M** times, where **M** is an integer representing the number of data records taken. Here, **I** is the *i*th data record in the range from 1 to **M**. For the *k*th spectral frequency, the value of $\omega$ is $kd\omega$, where $d\omega$ is the interval between adjacent predetermined spectral frequencies and equals 1 divided by the period of the data segment in seconds.

For the purposes of this analysis, a function $G(\omega', \omega_o)$ is defined as follows:

$$G(\omega',\omega_o) = \frac{-\sum_{i=1}^{M} F_i^2(\omega_o)^* \, F_i(\omega_o+\omega') \, F_i(\omega_o-\omega')}{\sum_{i=1}^{M} |F_i(\omega_o)|^2}$$

In this expression, $\omega_o$ is spectral frequency in the Fourier Transform that is the one closest (nearest) to the pulse repetition rate of the encoder, in radians per second. That rate will be some integral multiple of shaft rotation-frequency, such as 80 times it. $F_i(\omega_o)$ is a complex number representing the amplitude and phase of the Fourier Transform function for the spectral frequency nearest to $\omega_o$, (unless $\omega_o$ is made to coincide with a spectral frequency, in which case $\omega_o$ is that frequency). $F_i(\omega_o + \omega')$ and $F_i(\omega_o - \omega')$ are complex numbers representing the amplitude and phase of the Fourier Transform function for spectral frequencies equally spaced form the spectral frequency nearest to $\omega_o$, where $\omega'$ is any value $kd\omega$, where k is an integer and $d\omega$ is the frequency interval between adjacent spectral frequencies. $F_i^2(\omega_o)^*$ is the complex conjugate of the square of $F_i(\omega_o)$.

In utilizing this function, $G(\omega', \omega_o)$ is determined for every value of $\omega'$ that could define a frequency of interest. For example, where $\omega_o$ is 2400 Hz and spectral frequency interval is 0.1 Hz, $G(\omega', \omega_o)$ might be determined for the 2000 values of $\omega'$ from 0 to 200 Hz, covering the range of possible sidebands from 2200 Hz to 2600 Hz.

The function $G(\omega', \omega_o)$ has useful properties for purposes of this signal processing procedure. For values of $\omega'$ representative of frequency modulation $\omega'$, the value of the real part of $G(\omega', \omega_o)$ is a large positive spike. For values of $\omega'$ representative of amplitude modulation of $\omega'$, the value of the real part of $G(\omega', \omega_o)$ is a large negative spike. For other values of $\omega'$, such as those representative of noise components, the value of the real part of $G(\omega', \omega_o)$ is a small, random number. Thus, the modulation signals of interest can be identified and separated from noise signals on the basis of their sign (+/-) and magnitude.

How this occurs is now summarized. Each of the complex numbers of the spectrum may be represented in the form

$$F_i(\omega) = A_i(\omega) e^{j\phi_i(\omega)}$$

where $A_i(\omega)$ represents the amplitude of the complex number, $\phi_i(\omega)$ represents the phase of the complex number, and j is the square root of -1. Thus, the product term $F_i(\omega_o + \omega') \, F_i(\omega_o - \omega')$ in function G can be rewritten as

$$A_i(\omega_o + \omega') \, A_i(\omega_o - \omega') \, e^{j\phi_i(\omega_o-\omega')+\phi_i(\omega_o+\omega')}$$

It is well known to persons skilled in this field that the sideband phases about a carrier $\omega_o$ for a modulating frequency $\omega'$ may be represented as follows:

$$\phi(\omega_o - \omega') + \phi(\omega_o + \omega') = 2\phi(\omega_o) + \pi \qquad \text{for FM about } \omega_o;$$
$$= 2\phi(\omega_o) \qquad \text{for AM about } \omega_o; \text{ and}$$
$$= \text{random number for noise;}$$

where $\phi(\omega_o)$ is the phase of the carrier.

The remaining product term in the numerator of function G, $F_i^2(\omega_o)^*$, can be rewritten as:

$$A_i^2(\omega_o) \, e^{-2j\phi_i(\omega_o)}$$

Therefore, when $(\omega_o - \omega')$ and $(\omega_o + \omega')$ are FM sidebands, the function G simplifies to the following expression, because the other terms add up to zero:

$$G(\omega',\omega_o) = \frac{-\sum_{i=1}^{M} A_i^{\,2}(\omega_o)\, A_i(\omega_o+\omega')\, A_i(\omega_o-\omega')\, e^{j\pi}}{\sum_{i=1}^{M} |A_i(\omega_o)|^2}$$

The numerator of this expression G is a sum of scalars (real numbers), since the imaginary part of the complex numbers has canceled out. If the magnitude of the amplitude of the Fourier Transform value for carrier $\omega_o$ is considered B, and the magnitude of the amplitude of each sideband is considered C, the foregoing sum is approximately $MB^2C^2$. The denominator of the expression is also a real number, $MB^2$. Hence, the value of the whole function $G(\omega',\omega_o)$ is $C^2$, in the case of $\omega'$ being associated with frequency modulation.

It may be shown, similarly, that when $\omega'$ is associated with amplitude modulation, the value of the expression $G(\omega',\omega_o)$ is a real number of opposite sign from the expression for FM signals.

Finally, in the case of any $\omega'$ not associated with frequency or amplitude modulation of the carrier, the value of the expression G is a sum of random complex numbers, which as M becomes larger tend to cancel each other out to provide a near-zero sum.

The above-described property of the function $G(\omega',\omega_o)$ is utilized in this invention to distinguish true FM sidebands of interest from AM sidebands, noise, and like interference.

For purposes of this invention, $G(\omega',\omega_o)$ is to be monitored for values of $\omega'$ in the resonant frequency range of interest, that is, frequencies modulating the rotation frequency of the machine's shaft. Such frequencies, as previously indicated, fall in the range of 10 Hz to 200 Hz for the steam turbines described.

FIG. 11 shows a plot of the real part of $G(\omega', \omega_o)$ for $\omega'$ = 78 Hz, where 78 Hz is a resonant frequency of a turbine blade modulating a shaft-rotation frequency, and also for a value $\omega' = \omega_{AM}$, where the latter originates from an amplitude modulation signal. (The low-level noise round the X-axis represents the sums for values of $\omega$ producing random-walk vector sums.) It will be noted that $\mathrm{Re}G(\omega',\omega_o)$ is of opposite sign for frequency modulation and amplitude modulation. That property provides a way to distinguish signals originating from AM-modulation from the modulating sources of interest (and thus to reject AM). The plot of FIG. 11 is the result of doing the $G(\omega', \omega_o)$ procedure for every possible $\omega'$ of interest in the Fourier spectrum, and then plotting the value of the resulting real parts of $G(\omega', \omega_o)$ as ordinates and the corresponding values of $\omega'$ as abscissas.

It is thus seen that a hardware or software implementation for processing these signals in accordance with the foregoing procedure will provide an enhanced presentation of values of resonant frequency for a turbine blade or similar equipment. The inventors therefore consider this a preferred embodiment of the invention, although as previously explained the invention works with the other, less complex implementations previously described.

FIG. 12 shows a flowchart for implementation of the real part of $G(\omega',\omega_o)$ procedure for processing DFT and FFT spectrums to measure resonant frequencies of rotating equipment. The values $F_i(\omega_o)$, $F_i(\omega_o + \omega')$, and $F_i(\omega_o - \omega')$ are derived from the Fourier Transform analysis of a given data record. First, data is taken form the first data record. The values of $F_i(\omega_o)$, $F_i(\omega_o + \omega')$, and $F_i(\omega_o -\omega')$ are read for values of $\omega_o$ and the first $\omega'$ under examination.

The complex conjugate of $F_i(\omega_o)$ is taken and multiplied by $F_i(\omega_o)$, providing the absolute value of $[F_i(\omega_o)]^2$. $F_i(\omega_o)$ is squared and the complex conjugate of the square is taken, to provide an input for multiplication. Two other multiplier terms, $F_i(\omega_o + \omega')$ and $F_i(\omega_o - \omega')$, provide inputs and the terms are multiplied as indicated. The results are stored in memory locations, for accumulation as $B(\omega_o - \omega')$ and $A(\omega_o)$.

The foregoing procedure is then repeated for the next $\omega_o$ under examination, and so until it has been carried out for the last $\omega_o$, providing a set of values in a set of memory locations.

Then data is taken from the second data record. The foregoing procedure is repeated. The values of each $\omega_o$ are summed with the values for the corresponding $\omega_o$ already in memory for accumulation.

The operations and accumulation is repeated until the last data record has been processed, so that M data records have been processed. Finally, $B(\omega_o - \omega')$ is divided by $A(\omega_o)$ to provide $G(\omega', \omega_o)$. The values of $G(\omega', \omega_o)$ for each $\omega'$ are plotted and/or compared with a threshold value. As previously indicated, the values of $\omega'$ of interest are large real numbers and the "spurious" $\omega'$ values are small, complex numbers.

If the synchronous time-sampling technique is used in analog-to-digital conversion, it can be shown that the numerator of the function G can be decomposed and G can be rewritten as follows:

$$G'(\omega',\omega_o) = \cfrac{-\cfrac{1}{M}\sum_{i=1}^{M} F_i^{\,2}(\omega_o)^* \sum_{i=1}^{M} F_i(\omega_o+\omega')\, F_i(\omega_o-\omega')}{\sum_{i=1}^{M} |F_i(\omega_o)|^2}$$

Further, an alternative, simplified form of this expression can be used for detection of modulation, using the following formula:

$$G''(\omega',\omega_o) = \sum_{i=1}^{M} F_i(\omega_o + \omega')\, F_i(\omega_o - \omega')$$

This form is simpler computationally, but amplitude modulations and frequency modulations do not appear simply as positive or negative peaks. The phases of these peaks must be analyzed to distinguish them.

A generalization of the foregoing procedure is to incorporate the frequency and phase characteristics originating from the modulation process into signal-processing procedures tat emphasize the amplitude of the signals of interest and deemphasize the amplitude of noise signals (signals not of interest). It is considered that the foregoing real part of $G(\omega',\omega_o)$ procedure is exemplary of a class of such procedures.

The result of any of these procedures is to optimize the signal for rejection of interference. That permits the remaining spectral peaks to be identified and analyzed in detail for their sources and for changes in characteristics relating to physical conditions in the system.

VI. *Actual Test Data*

Tests using the invention were carried out on an operating turbine-generator set at an electric power generation plant. A plot of the spectra derived from the test is shown in **FIG. 10**, illustrating spectral amplitudes for spectral frequencies from 0 to 200 Hz and power relative to a 1 v signal amplitude in the -83 db to -87 db range. The empirical data were then compared with data provided by the turbine manufacturer, based on its own measurements of its turbine blade resonances. As described below, the measured data utilizing the invention agree closely with the manufacturer's data. (all of the following data are rounded off to the nearest integer.)

Referring to **FIG. 10**, it is seen that the 30 Hz interference harmonics go off scale. The bandwidth of the 30 Hz harmonics is caused by FFT leakage, which results from the fact that 30 Hz and its multiples do not fall exactly on spectral frequencies in the signal-processing procedures that were used with this data. This chart thus illustrates the kind of noise and interference signals observed when the invention is practiced without the signal-processing refinements described in previous section V, which the inventors had not yet implemented at the time of their collection of the data shown in **FIG. 10**. In this data set, no frequency of interest was in the vicinity of a 30 Hz shaft-rotation harmonic. However, in other data sets, a frequency of interest might be near a 30 Hz harmonic and thus its detection would be hindered; this could occur, for example, if a mean resonant frequency migrated in the direction of a 30 Hz shaft-rotation harmonic, whose energy might then reinforce the resonance. That situation would be one in which detection of the migrant frequency would be particularly important, for reasons discussed below in section VII. The inventors therefore consider it very important to utilize the signal-processing refinements described in previous section V.

Referring again to **FIG. 10**, a peak was detected at 78 Hz. The turbine manufacturer reported that 78 Hz was the fundamental mode blade resonance for the L-0 stage of this turbine. A second peak was detected at 83 Hz in **FIG. 10**; the manufacturer reported that 83 Hz was the fundamental mode blade resonance for the L-1 stage of this turbine. A third peak was detected at 103 Hz in **FIG. 10**; the manufacturer reported that 103 Hz was a higher mode blade resonance for the L-0 stage of this turbine. A fourth peak was detected at 144 Hz in **FIG. 10**; the manufacturer reported that 145 Hz was an additional blade resonance for this turbine (stage and mode not identified).

In addition, peaks at 41 Hz and 128 Hz are shown in **FIG. 10**; the manufacturer did not identify these. However, it is believed that these are other shaft or blade frequencies that the manufacturer did not identify to the inventors.

In addition, the system of the invention identified a 19 Hz peak (not shown in **FIG. 10**), which corresponds to the 19 Hz fundamental torsional resonant mode of the shaft.

It should be noted that the preceding discussion, and the data measured and shown in **FIG. 10**, involved an 1800 rpm 4-pole machine, with 30 Hz rotation. A 3600 rpm 2-pole machine will have 60 Hz rotation, so that all harmonic-interference frequencies will be scaled up. Also, all discussion has been in terms of the 60 Hz standard used in the United States. In foreign countries using another standard, such as 50 Hz, appropriate correction must be made regarding harmonic interference.

VII. *Application of System to Defect Detection*

As a turbine blade ages, the corrosive environment in which it operates tends to corrode and induce cracks in the blade. The effect of such cracking is to decrease the resonant frequency (or a resonant frequency) of the blade. Another effect that occurs is stiffening of the blade, which increases resonant frequencies. That can place a blade resonant frequency near a shaft harmonic excitation frequency (for example, 90 Hz). That in turn can cause a large-amplitude oscillation leading to metal fatigue and cracking.

Turbine blades are designed and tuned to have resonant frequencies that are not a multiple of 30 Hz. The reason is to avoid having harmonics of the rotating system induce vibration, stress, and failure of the blade. However, when a blade ages and/or cracks, or possesses or develops secondary resonant modes, its resonant frequencies can approach a multiple of 30 Hz. In that event, the system harmonics would reinforce to resonance, thus increasing the amplitude of blade resonant vibration, and catastrophic failure can result. Similar destructive phenomena can occur with shafts, such as the shaft of the pump of **FIG. 2**, as well as with other rotating components of rotary machines.

When a single blade of a turbine begins to crack, two effects on the spectra of **FIGS. 6** to **8** occur. First, the magnitude of the modulation of the 30 Hz shaft-rotation frequency by 78 Hz (or any other modulating resonant frequency) decreases, because the particular blade that is cracking stops contributing angular momentum at the oscillation frequency of the remaining blades. Second, a new modulation occurs at a lower frequency than 78 Hz, as a result of the activity of the damaged blade, which now has a lower resonant frequency. (Blade stiffening causes an opposite effect, in which resonant frequency increases.)

**FIG. 9a** illustrates the total frequency contributions from a complete set of a new L-0 state turbine. The resonant frequency centers on 78 Hz. **FIG. 9b** shows the anticipated effect of age on some of the blades. A subset of one or more blades develops some cracking and some further decrease of resonant frequency. Hence the amplitude of modulation at 78 Hz decreases and a secondary peak (shoulder **s** of **FIG. 9b**) slightly below 78 Hz develops. In addition, many of the blades corrode, tending to move the composite curve below 78 Hz. (Stiffening would cause the frequency contributions of the stiffened blades to migrate above 80 Hz.)

**FIG. 9c** illustrates the events of **FIG. 9a-9b** as a function of time. In this example, the turbine-blade resonant frequency slowly shifts downward. At a certain time, blade deterioration begins to become more severe and frequency declines more rapidly. This is indicative that a catastrophic blade failure may soon occur.

The foregoing suggests two points tat should be made about use of the invention in anticipating component failure in rotating machines. First, various judgment factors enter into making a decision whether an "alarm" condition exists that justifies shutting a machine down for repair. Second, resonance information other than simply mean resonant frequency may be relevant to making such decisions.

A. *Judgment Factors*

Cracking is a progressive process. At first, a crack is very small and does not impair turbine operation; also, the effect of the crack on resonant frequency of the affected blade may be undetectable at first. The crack slowly increases in size, at an increasing rate, accompanied by progressively decreasing resonant frequency of the blade. Eventually, the crack is large enough to cause the cracked blade to fracture. (In many cases blade stiffening and a consequent increase of resonant frequency may precede and cause cracking.)

Substantial field data is needed to make a decision on what amount of change in resonant frequency should be considered serious enough to warrant shutting a turbine down to replace a deteriorating blade before it shatters. The earlier the shutdown decision is made, the more downtime per year there is and the more blade replacement occurs. The later the shutdown decision is made, the greater the risk of catastrophic failure resulting in a more expensive repair. A further relevant factor is that early warning of impending blade failures permits a replacement to be ordered in advance, so that downtime while a blade is on order is lessened. (It is often expensive and infeasible to inventory replacement blades for steam turbines, because they are individually expensive and are different from unit to unit.)

It is thus a matter of business experience, engineering judgment, and empirical data what criteria to establish for shutdown and repair. The instant invention does not of itself provide a method of making that judgment. Rather, the invention provides mechanical instrumentation to carry out the judgment in accurate accordance with the managerially selected criteria. The invention is capable of implementing many different such criteria, illustrations of which are discussed below.

B. *Measures of Resonance Information*

A variety of measures of resonance characteristics may be considered in evaluating likelihood of machine failure. The inventors consider the following measures useful, but they do not intend to suggest that these are the only useful measures. Any measure that facilitates or implements a judgment procedure considered valid would be useful and appropriate to embody in the manner taught in this disclosure.

1. *Mean frequency*

The discussion in the specification to this point has implicitly been directed mainly to a principal measure of resonance information: the amplitude-weighted mean frequency $\bar{f}$, "f-bar," which may be defined as follows:

$$\bar{f} = (\Sigma \, f_i \, A_i) \, / \, (\Sigma \, A_i)$$

where $f_i$ is a frequency in the range $f_1$ to $f_2$, and $A_i$ is the amplitude of the signal for that frequency. All Sigmas in these formulas are taken from $i = f_1$ to $f_2$, where $f_1$ is the lowest frequency bin value in a resonance peak and $f_2$ is the highest frequency bin value in that peak.

2. *Variance*

The variance of frequency about f, VAR(f), is a measure of how widely dispersed or spread out a peak is.

$$VAR(f) = (\Sigma \, [f_i - \bar{f}]^2 . A_i) \, / \, (\Sigma \, A_i)$$

The inventors consider that an increase an VAR(f) indicates that differences in the physical characteristics of individual blade are arising.

3. *Skewness*

The skewness of f about $\bar{f}$ is a measure of the symmetry or asymmetry of a peak around the mean, and may be defined as follows:

$$S(f) = (\Sigma \, [f_i - \bar{f}]^2 . A_i) \, / \, ([\Sigma \, A_i] . [VAR(f)^{1.5}).$$

4. *Kurtosis*

The kurtosis of f about $\bar{f}$ is a measure of "peakedness."

$$K(f) = (\Sigma \, [f_i - \bar{f}]^4 . A_i) \, / \, ([\Sigma \, A_i] . [VAR(f)]^2).$$

Two curves can have the same variance but one can have more kurtosis (be more sharply peaked) than the other.

5. *Other measures*

Other measures of frequency characteristics within a peak exist. The foregoing are merely those associated with the exponents of $[f_i - \bar{f}]$ up to four. Further such measures may be employed with equal facility where they are considered of interest by users.

An additional measure, discussed below, is whether a side peak exists that is superimposed on a main peak under examination (and, in particular, as discussed below, whether the shape and/or location of the side peak is changing over time, relative to the main peak).

C. *Thresholding*

The foregoing measures are directed to values of frequency and amplitude at a given time. To determine whether a change in resonance information is occurring, suggesting a change in the physical characteristics of the equipment, historical data of a measure are taken. Then a comparison is made of values of the measure at different times. Thus, **FIG. 9c** illustrates observed values of $\bar{f}$ over time.

In general, these techniques are a thresholding approach. A threshold value of a measure of resonance information is predetermined for a single rotating component or a set of related components, such as a stage of a turbine. Then, observations are made until the predetermined threshold is reached or passed, whereupon an "alarm" condition is defined to exist.

The alarm and/or shutdown-judgment criteria are implemented into a subsystem within processing unit **36** that is referred to at times hereinafter as a comparator. The processing unit ascertains resonant information, that is, measured characteristics of the DFT and/or FFT spectral peaks relating to resonant modes of the machine component in question. This information or a report thereof is displayed on monitor **40a**, presented by printer **40a**, and/or stored in memory locations.

For example, the comparator compares a first signal $F_1$ that is representative of an initial value of a measure of resonance information, such as mean resonant frequency, relating to a stage (set) of turbine blades (or other rotating equipment) with a second signal $F_2$ that is representative of a subsequent value of that measure of resonance information for that stage. If $F_1$ and $F_2$ have a predetermined relationship defined in the system (that is, built into its hardware or software) as predictive of cracking, the comparator provides an output signal such as an alarm signal or a shutdown signal.

The following examples illustrate various thresholding approaches.

*EXAMPLE 1 - Turbine Alert by Fixed Threshold Method*

A steam turbine with an L-0 stage having a mean resonant frequency of 78.00 Hz initial value for a blade is monitored with the control system of the invention, at monthly intervals. The following readings are registered:

| Month | 1 | 2 | 3 | 4 | ... | 18 | 19 |
|---|---|---|---|---|---|---|---|
| Res. Freq. | 77.98 | 77.99 | 77.98 | 77.97 | ... | 77.96 | 77.94 |

A first signal representative of a predetermined threshold frequency value, here 0.05 Hz, is stored. A second signal representative of an initial value of a mean resonant frequency of a turbine stage, here 78.00 Hz, is stored. This occurs at month 0, upon installation of the system.

At subsequent months 1, 2, 3 ... readings of mean resonant frequency for the turbine stage are made. That provides, each time, a third signal representative of a then-current value of mean resonant frequency for the turbine stage.

The third signal is subtracted from the second signal, providing a difference signal. If the difference signal does not exceed the first signal (threshold value 0.05 Hz), no action is taken and the procedure continues. This occurs through month 18.

At month 19, the difference signal exceeds the first signal, indicating that the threshold has been passed, so that the predetermined shutdown criterion has been met. An alarm and/or shutdown signal is sent and the turbine is shut down.

*EXAMPLE 2- Shutdown of Turbine by Ratio Method*

The same turbine is now monitored using the criterion that it should be shut down if blade resonant frequency falls below 99% of its initial value 78 Hz. The following readings are registered:

| Month | 1 | 2 | 3 | 4 | ... | 18 | 19 | 20 |
|---|---|---|---|---|---|---|---|---|
| Res. Freq. | 77.98 | 77.99 | 77.98 | 77.97 | ... | 77.23 | 77.25 | 77.19 |

A first signal representative of a predetermined scalar constant c, here 0.99, is stored. A second signal representative of an initial value of a mean resonant frequency of a turbine stage, here 78.00 Hz, is stored. The second signal is multiplied by constant c, here 0.99, to provide a third signal representative of 77.2 Hz. The third signal is stored.

The control system periodically monitors the rotating system. Each time, a fourth signal representative of a then-current value of mean resonant frequency for the stage is provided, If the fourth signal exceeds the third signal, no action is taken and the procedure continues. This occurs through month 19.

At month 20, the fourth signal no longer exceeds the third signal, indicating that the 99% threshold has been passed, so that the predetermined shutdown criterion has been met. An alarm and/or shutdown signal is sent and the turbine is shut down.

More sophisticated statistical measures of change of mean frequency than the fixed-threshold can be used. A preferable approach is to use exponential (or geometric) smoothing or a similar moving-time average approach, in which noise excursions of current mean resonant frequency are factored out.

A different approach for detecting prospective blade failure is to look for presence of blade subsets having a lower resonant frequency, as an indication that the subset is cracking, as shown in **FIG. 9b**. One way to do that is to "eyeball" the frequency distribution as shown on a monitor or in a report, to observe whether a formation of the configuration shown in **FIG. 9b** is beginning to form. Another approach is to monitor an appropriate measure of resonance information, such as skewness, S(f), defined in the preceding section. A shift downward accompanied by an increase in skewness is an indication that a subset of blades in a stage is changing resonant frequency, possibly because of corrosion or cracking. In any event, existence of such a shift would be considered a cause for concern by persons in the electric power generation industry.

D. *Shoulder Detection*

It was previously indicated that appearance of a shoulder on a resonant frequency curve, for example, as in **FIG. 9b**, indicates that a subset within the 60-100 blades contributing to the curve are doing something different from the rest of the set. The subset is stiffening, cracking, corroding, or otherwise undergoing some change that may lead to a blade failure and thus to costly down time.

A shoulder-detection subsystem is now described for automatically monitoring and processing DFT and FFT data to detect formation of such a should or side peak on a primary peak, in lieu of simply "eyeballing" for such an occurrence. Referring to **FIG. 9a-9b**, it is seen that a power spectrum of the type shown in these figures has a range of spectral amplitudes the envelope of which centers around a primary resonance peak. Such a portion of a Fourier Transform spectrum is referred to at time hereinafter as "spectral amplitudes characterizing a resonance peak."

The subsystem described here processes the Fourier Transform spectral amplitudes characterizing a primary resonance peak to determine whether they include spectral amplitudes characterizing a secondary resonance peak or shoulder. This is accomplished by passing the Fourier Transform spectral amplitudes through an appropriate digital filter to attenuate the spectral amplitudes associated with the primary resonance peak for the whole set of 60-100 blades, and pass the spectral amplitudes associated with a shoulder or side peak, if one exists, for a subset of blades.

Several procedures for side-peak and shoulder detection are now described. For example, consider a primary resonant peak associated with 41 0.1-Hz spaced spectral bins from 76.0 Hz to 80.0 Hz. The maximum spectral amplitude is at 78.0 Hz. In addition, a secondary resonant peak is associated with a range of approximately seven 0.1-Hz spaced bins from 76.8 Hz to 77.4 Hz, and the amplitude difference between the secondary peak and the trough to its right is about 10% of the amplitude of the primary peak.

The subsystem reads the amplitudes for the 41 spectral bins associated with the primary peak, as well as for several bins below and above that range. The additional bins on each side are assumed to have spectral amplitudes of essentially zero. The 40+ spectral amplitudes define a first signal S, which contains the spectral amplitudes characterizing the primary peak (as well as those in the seven bins characterizing the secondary peak within the primary peak).

The subsystem then provides, as a second signal S', a moving average signal taken over several spectral bins flanking each bin (for example, 3-4 bins on each side of each one - approximately the bandwidth of the secondary peak, where "bandwidth" refers here to the span of bins into which the secondary peak falls). This signal-processing procedure deemphasizes narrow bandwidth structure in first signal S (meaning structure associated with relatively few bins, as contrasted with wide bandwidth structure, which is that associated with a relatively greater number of bins, such as the 41 bins associated here with the primary peak). This signal-processing procedure can also be carried out by using a recursive digital filter, which can more effectively deemphasize the narrow bandwidth structure in first signal S", where S"=S-S' . That emphasizes the narrow bandwidth structure in the spectral amplitudes characterizing the resonant peak, relative to the wide bandwidth elements. While the primary peak (at 78.0 Hz in the spectral data) has greater amplitude than the secondary peak (at 77.1 Hz), that situation is reversed in the processed signal just described; the processed-signal amplitude is greater at 77.1 Hz than at 78.0 Hz. That permits detection of the existence of the secondary peak by any of several expedients.

Identification of a secondary peak is facilitated by subtracting from the foregoing third signal S" a similar reference signal obtained by subjecting to the same procedures a first signal from a Fourier Transform spectrum for the same turbine where it is known that no secondary peak exists. The first signal can be derived from initial baseline data at the time of installation or before changes occur. By subtracting the first signal from the previously derived third signal, a fourth signal is provided that is representative of the narrow-bandwidth signal components of the secondary peak (if there is one), and eliminates unwanted contributions originating from limitations of the moving average filter.

Because smoothing and subtraction are linear operations, the order in which they are performed does not matter. Therefore, it is equivalent to the above to subtract a reference signal; to smooth the difference signal, providing a smoothed difference signal which is representative of the wide-bandwidth signal components of the difference signal; and to subtract the smoothed difference signal from the difference signal, providing a final signal representative of the narrow-bandwidth signal components of the difference signal. The output signal is representative of changes in the narrow-bandwidth signal components of the difference signal, and thus of trends in secondary-peak formation, if any.

This approach is useful for extracting signals representative of relatively small shoulder on a primary peak, for it is very powerful in filtering out for presentation narrow-bandwidth signal components that are not representative of the primary peak.

The presence of a shoulder or secondary peak may be detected by any procedure that picks up a local maximum in a region can be scanned, bin by bin, from a first Fourier amplitude value in excess of a predetermined threshold to the last such amplitude value in the set.

Other procedures for shoulder detection include storing baseline data at any time. On subsequent occasions, the same kind of data is read and the difference from the prior data is taken. The difference will be approximately zero if no change occurs, but will be nonzero in the event of a change such as that depicted in **FIG. 9b**. That permits detection of the existence of a secondary peak, if any, by any of several conventional expedients obvious to those skilled in the art. If installation data is unavailable, a model can be prepared from actual data, by fitting the latter to a Gaussian distribution or other appropriate resonance model by a least-squares method. Later actual data can then be compared with the model, in the manner just described.

For the foregoing shoulder-detection procedures to work properly, there must be enough spectral frequencies (bins) in the primary peak for both the main peak (for example, 78 Hz) to be processed and also for the narrower shoulder (if any) to be processed. The inventors consider that 20 to 40 spectral bins in this range is sufficient. Depending on the number of spectral frequencies in the DFT or FFT used, there will or will not be enough bins in the region of interest. If there are not enough bins in the region of interest, more must be provided. One method is simply to expand the number of spectral frequencies in the whole FFT or DFT. That may be inconvenient or impractical, considering computation-speed and memory constraints. In such event, conventional techniques exist for expanding the data for the region of interest.

DFT and FFT approaches differ in a significant respect. The FFT algorithms in common use determine values for the whole set of spectral bins at once, so that computational time cannot be saved by excluding bins not of interest. However, DFT algorithms permit such bins to be excluded before values are determined, so that the time spent on unneeded regions can be saved. In both cases, though, data must first be taken for the entire data record. To focus in on a 4 Hz region with a minimum of 12 frequency bins, a data record at least 3 sec long should be used. A sample rate of 2400/sec (representing an 80-tooth bull gear and a 30 Hz shaft) would require an FFT of at least 4096 spectral bins and thus 8192 data points, which is the current practical limit for most off-the-shelf spectrum analyzers. Using DFT analysis instead would permit computations to be made for only 10% of the 4096 bins. Significant computational savings can be realized by using a DFT rather than FFT approach here, assuming that analysis of only a sufficiently limited portion of the frequency spectrum is satisfactory.

Complex signal heterodyning is a standard technique for "zooming" in on a spectral region of interest to provide more spectral bins in the region without having to determine values for spectral bins outside the region. Complex signal heterodyning DFT and FFT analysis to be performed using decimated data samples. These techniques are more economical than expanding the total number of spectral bins in the FFT or DFT, and are therefore considered preferable in practicing this invention. Zooming techniques are known to persons skilled in this art and are described in the literature.

*GENERAL CONCLUDING REMARKS*

Use of one or more of these signal-processing methods permits regular monitoring of rotating-component resonant vibration mode information during ordinary operation of the machine, so as to detect imminent failure before it occurs. Monitoring is carried out automatically, so that orderly shutdown can be accomplished before a catastrophic failure occurs.

While the invention has been described in connection with specific and preferred embodiments thereof, it is capable of further modifications without departing from the spirit and scope of the invention. This application is intended to cover all variations, uses, or adaptations of the invention, following, in general, the principles of the invention and including such departures from the present disclosure as come within known or customary practice within the art to which the invention pertains, or as are obvious to persons skilled in the art, at the time the departure is made. It should be appreciated that the scope of this invention is not limited to the detailed description of the invention hereinabove, but rather comprehends the subject matter defined by the following claims.

Further, in various places in the specification illustrations have been given in terms of analog or digital filters or similar circuits, on the basis of whether analog or digital implementation means appeared more convenient. In general, any analog implementation can be replaced by a digital implementation, and *vice versa*. It is just a matter of chip availability and cost. Going form one implementation to the other will be an obvious expedient to persons skilled in the art. By the same token, in various places voltage models of circuits have been described (for example, frequency-to-voltage conversion of pulses), but utilization of the dual of such circuits (that is, using a current model) will be obvious to persons skilled in this art. Accordingly, it is considered that the invention described herein comprehends both digital and analog implementations, and both voltage and current duals, and claims directed to one or the other of the foregoing are intended to embrace the equivalent alternative implementation.

As used in the claims, the following terms have the following meanings:

"Instantaneous frequency" of a pulse train and "spacing" of pulses in a pulse train are inverses of one another. Thus, if a pulse train from an encoder contains 2500 pulses/sec second, the frequency is 2500 Hz and the pulse spacing is 0.400 msec. If the spacing of these pulses decreases by 0.1 %, or 400 nsec, the instantaneous frequency of the pulse train will increase by 0.1%, or 2.5 Hz. In practicing this invention, changes in pulse spacing (i.e., instantaneous frequency) are monitored and subjected to signal processing, because they are representative of modulation of turbine shaft rotation speed by blade resonant vibrations, or (more generally) modulation of rotary machine system rotation rate by resonant vibrations of rotating elements of the system.

"Data record" means a set of data provided by an analog-to-digital converter or similar device. For purposes of this invention, such data is ordinarily data representative of instantaneous frequency of shaft rotation of a rotating machine.

"Data segment" means a subset of data in a data record. For purposes of this invention, a data segment always contains data for exactly one complete shaft rotation (360°).

"Sensor pulse" refers to (a) a signal provided by a sensor or (b) or a conditioned signal derived therefrom. Such conditioning means removal of noise, such as by low-pass filtering, and may include thresholding and/or removal of dc.

To "clock" an analog-to-digital converter means to cause it to provide a reading at its output, said output being a digital signal representative of the amplitude of an analog signal at the input of the analog-to-digital converter at the time it is clocked.

**Claims**

1. A method for measuring resonance information for at least one rotating element (16,20,22,24,26) of a rotary machine (12), said rotary machine's rotating elements comprising a rotating shaft element (16) and, optionally, one or more non-shaft rotating elements; where:

   said rotating elements (16,20,22,24,26) rotate about an axis at a fundamental frequency of angular rotation;
   at least one of said rotating elements has oscillatory vibrations having at least one resonant vibration mode; and
   said oscillatory vibrations modulate said fundamental frequency of angular rotation, causing a modulation of said fundamental frequency of angular rotation;

   said method comprising:

   (1) monitoring said machine (12) with a sensor (30) for providing a rotation signal representative of said shaft's frequency of angular rotation, said sensor (30) providing a train of sensor pulses such that:

   for each complete rotation of said shaft, the sensor generates $N$ sensor pulses, where $N$ is a positive integer;
   each of said $N$ sensor pulses is representative of an angular-rotation increment by said shaft; and
   said pulses, or the spacings therebetween, have an instantaneous frequency associated therewith;

   (2) deriving from said rotation signal a further signal that is representative of said modulation of said fundamental frequency of angular rotation;
   (3) electronically processing said further signal, providing therefrom a signal spectrum representative of instantaneous-frequency components present in said instantaneous frequency; and
   (4) electronically processing said signal spectrum, providing therefrom resonance-information spectral signals representative of frequency or amplitude characteristics, or both, for said resonant vibration mode.

2. A method according to claim 1, wherein:

   (a) said further signal is derived from said rotation signal by feeding said train of sensor pulses to a frequency-to-voltage converter (34) that provides as an output an analog voltage signal whose amplitude is representative of said instantaneous frequency, where said analog voltage signal is provided as said further signal; and
   (b) said further signal is processed to derive said signal spectrum by:

(i) feeding said analog voltage signal to an analog-to-digital converter, providing as an output therefrom digital signals representative of said instantaneous-frequency components present in said instantaneous frequency; and

(ii) electronically performing a Fourier Transform spectral analysis on said digital signals, providing a Fourier Transform signal spectrum representative of said instantaneous-frequency components.

3. A method according to claim 2, wherein said Fourier Transform is a Discrete Fourier Transform and spectral amplitudes of interference at shaft harmonic frequencies in said signal spectrum are lessened, relative to other spectral amplitudes, by performing the following additional steps before performing said Fourier Transform spectral analysis on said digital signals:

(i) providing a data record consisting of an integral number $n$ of consecutive data segments, each said data segment consisting of an integral number $m$ of consecutive said digital signals; and

(ii) making each of said data segments have as a duration a time interval containing exactly one complete rotation of said shaft (16).

4. A method according to claim 3, wherein said analog-to-digital converter is clocked, and the length of said data record is controlled, by:

(a) routing said sensor pulses to a clock signal input port of said analog-to-digital converter, providing clock pulses;

(b) counting said clock pulses for each said data segment until said data segment contains data from a number of said clock pulses representing exactly one complete rotation of said shaft, and thereupon terminating said data segment; and

(c) counting said data segments for each said data record until said data record contains an integral number of said data segments, and thereupon terminating said data record.

5. A method according to claim 2, wherein said Fourier Transform is a Fast Fourier Transform and spectral amplitudes of interference at shaft harmonic frequencies in said signal spectrum are lessened, relative to other spectral amplitudes, by performing the following steps before performing said Fourier Transform spectral analysis on said digital signals:

(i) providing a data record consisting of exactly an integral number $n$ of consecutive data segments, each said data segment consisting of exactly an integral number $m$ of consecutive said digital signals, where $n$ and $m$ are each integral powers of two; and

(ii) making each of said data segments have as a duration a time interval containing exactly one complete rotation of said shaft.

6. A method according to claim 5, wherein said analog-to-digital convener is clocked, and the length of said data record is controlled, by:

(a) routing said sensor pulses to a signal input port of a pulse multiplier-divider circuit, multiplying and dividing said sensor pulses' pulse repetition rate, and providing at an output port of said multiplier-divider circuit a further pulse train in which exactly an integral number $m$ of pulses occurs in each time interval containing exactly one complete rotation of said shaft, where $m$ is an integral power of two;

(b) routing said further pulse train to a clock signal input port of said analog-to-digital convener, providing clock pulses thereat;

(c) counting said clock pulses for each said data segment until said data segment contains data from exactly said number $m$ clock pulses, and thereupon terminating said data segment; and

(d) counting said data segments for each said data record until said data record contains exactly $m'$ said data segments, and thereupon terminating said data record, where $m'$ is an integral power of two.

7. A method according to claim 1, wherein:

(a) said further signal is derived from said rotation signal by feeding said train of sensor pulses, or a signal derived therefrom, to a low-pass filter whose cutoff frequency is less than half a predetermined clocking frequency and is greater than a predetermined highest frequency component of interest present in said train of sensor pulses, providing as an output of said filter an anti-aliased pulse train; and

(b) said further signal is processed to derive said signal spectrum by:

(i) feeding said anti-aliased pulse train to an analog-to-digital converter, providing as an output thereof digital signals representative of said instantaneous-frequency components present in said instantaneous frequency; and

(ii) electronically performing a Fourier Transform spectral analysis on said digital signals, providing a Fourier Transform signal spectrum representative of said instantaneous-frequency components.

8.  A method according to claim 7, wherein said analog-to-digital convener has a clocking-signal input port to which a clocking signal is fed, and said clocking signal is obtained by:

(a) removing from said train of sensor pulses, or from a signal derived therefrom, signal components representative of said modulation of said fundamental frequency of angular rotation, providing an unmodulated pulse train;

(b) feeding said unmodulated pulse train to a pulse multiplier, providing as an output thereof a multiplied unmodulated pulse train; and

(c) feeding said multiplied unmodulated pulse train to said clock-signal input port as said clocking signal, and clocking said analog-to-digital converter therewith.

9.  A method according to claim 8 wherein said step (a) is performed by passing said train of sensor pulses through a narrow band-pass filter having a pass band tat centers on a mean frequency $f_0$ of said sensor pulses and extends above and below said frequency $f_0$, through frequencies $f_0 + f_1$ to $f_0 - f_1$, where $f_1$ is less than a predetermined frequency $f'$, where said frequency $f'$ is a lowest frequency of interest among said signal components representative of said modulation of said fundamental frequency of angular rotation.

10.  A method according to claim 7, wherein said Fourier Transform signal spectrum includes a carrier frequency, a lower sideband frequency, and an upper sideband frequency, each said frequency having complex Fourier Transform components, and wherein interferences by noise and by amplitude modulations are reduced after said Fourier Transform spectral analysis by:

(a) combining said complex components of said crier frequency, said lower sideband frequency, and said upper sideband frequency to form complex combinations of said complex Fourier Transform components; and
(b) averaging said complex combinations over successive data records.

11.  A method according to claim 10, wherein said Fourier Transform signal spectrum comprises a set of signal-components, each of which corresponds to one of a set of discrete spectral frequencies spaced from one another by a spectral-frequency interval $k$, each of said signal-components having a spectral amplitude and phase; said method being adapted to separate (i) signal-components in said signal spectrum that are representative of a frequency modulation of said fundamental frequency of angular rotation, and (ii) signal-components therein representative of amplitude modulation of said fundamental frequency of angular rotation, from one another and from noise; said method comprising:

(a) extracting from said signal spectrum a first signal, representative of a spectral phase and amplitude for a first spectral frequency, which is that spectral frequency nearest to frequency $\omega_0$, where $\omega_0$ is a mean rate of repetition of sensor pulses;
(b) extracting from said signal spectrum a second signal, representative of a spectral phase and amplitude for a second spectral frequency, that is higher than said first spectral frequency by a number $n$ of spectral-frequency intervals, where $n$ is an integer and $n \geq 0$, so that said second spectral frequency is within one spectral-frequency interval of a signal-component frequency $\omega_0 + \omega'$, where $\omega' = nk$ ;
(c) extracting from said signal spectrum a third signal, representative of a spectral phase and amplitude for a third spectral frequency, that is less than said first spectral frequency by said $n$ number of spectral-frequency intervals, so that said third spectral frequency is within one spectral-frequency interval of a signal-component frequency $\omega_0 - \omega'$, where $\omega' = nk$ ; and
(d) digitally processing said first, second, and third signals to provide a further signal, representative of sideband frequencies originating from sources modulating said frequency $\omega_0$.

**EP 0 744 017 B1**

**12.** A method according to claim 11 in which step (d) comprises the following steps:

   (a) providing a fourth signal, representative of phase and amplitude of a complex conjugate of a square of said first signal;
   (b) providing a fifth signal, representative of phase and amplitude of a product of said second signal, said third signal, and said fourth signal;
   (c) providing a sixth signal, representative of a sum of said fifth signals over a set of $M$ data records, where $M$ is an integer;
   (d) providing a seventh signal, representative of a square of an absolute value of said first signal;
   (e) providing an eighth signal, representative of a sum of said seventh signals over said set of $M$ data records; and
   (f) providing a ninth signal, whose amplitude is representative of said sixth signal divided by said eighth signal, said amplitude of said ninth signal also being representative of whether $\omega_0 + \omega'$ and $\omega_0 - \omega'$ are frequencies originating from sources modulating said frequency $\omega_0$.

**13.** A method according to claim 7, wherein said Fourier Transform spectral analysis consists of forming a power spectrum.

**14.** A method according to claim 1 wherein, after steps 1-4, the following additional steps occur:

   (a) providing a first signal, representative of an initial value of resonance information for at least one of said rotating elements of said machine;
   (b) providing a second signal, representative of at least one subsequent value of said resonance information for said rotating elements; and
   (c) comparing said first signal with said second signal and providing an output signal representative of whether said first signal and said second signal have a predetermined relationship indicating a shift in said resonance information.

**15.** An apparatus (14) for measuring resonance information for at least one rotating element (16,20,22,24,26) of a rotary machine (12), said rotary machine's rotating elements comprising a rotating shaft element (16) and, optionally, one or more non-shaft rotating elements (20,22,24,26); where:

   said rotating elements (16,20,22,24,26) rotate about an axis at a fundamental frequency of angular rotation;
   at least one of said rotating elements has oscillatory vibrations having at least one resonant vibration mode; and
   said oscillatory vibrations modulate said fundamental frequency of angular rotation, causing a modulation of said fundamental frequency of angular rotation;

said apparatus comprising:

   coupled to said rotary machine (12), a sensor (30) for providing at an output port thereof a rotation signal representative of said shaft's frequency of angular rotation, said sensor providing at said output port a train of sensor pulses such that:

      for each complete rotation of said shaft (16), the sensor (30) generates $N$ sensor pulses, where $N$ is a positive integer;
      each of said $N$ sensor pulses is representative of an angular-rotation increment by said shaft (16); and
      said pulses, or the spacings therebetween, have an instantaneous frequency associated therewith;

   coupled to said output port of said sensor (30, a pulse demodulator (32) for deriving from said rotation signal, and for providing at an output port of said pulse demodulator, a further signal that is representative of said modulation of said fundamental frequency of angular rotation;
   coupled to said output port of said pulse demodulator (32), an electronic processing unit (36) having means:

      for electronically processing said further signal, providing therefrom a signal spectrum representative of instantaneous-frequency components present in said instantaneous frequency; and
      for electronically processing said signal spectrum, providing therefrom resonance-information spectral signals representative of frequency or amplitude characteristics, or both, for said resonant vibration mode.

**16.** An apparatus according to claim 15, wherein:

said pulse demodulator includes a frequency-to-voltage converter (34) having an input port to which said train of sensor pulses is fed, having an output port coupled to said output port of said pulse demodulator, said output ports providing an analog voltage signal having an amplitude representative of said instantaneous frequency; and

said electronic processing unit (36) includes:

an analog-to-digital converter for convening said analog voltage signal to digital signals, said digital signals being representative of said instantaneous-frequency components present in said instantaneous frequency; and

a Fourier Transform processor for electronically performing a Fourier Transform spectral analysis on said digital signals, providing a Fourier Transform signal spectrum, said signal spectrum being representative of said instantaneous-frequency components.

**17.** An apparatus according to claim 16, adapted to lessen spectral amplitudes of interference at shaft harmonic frequencies in said signal spectrum, relative to other spectral amplitudes, wherein said Fourier Transform processor is configured to perform a Discrete Fourier Transform; said apparatus further comprising the following additional elements for processing said digital signals before they reach said Fourier Transform processor:

coupled to said analog-to-digital converter and adapted to receive said digital signals, means for providing a data record consisting of an integral number $n$ of consecutive data segments, each said data segment consisting of an integral number $m$ of consecutive said digital signals;

coupled to said means for providing a data record, means for making each of said data segments have as a duration a time interval containing exactly one complete rotation of said shaft (16); and

coupled to said means for providing a data record, means for providing said data record to said Fourier Transform processor.

**18.** An apparatus according to claim 17, wherein said analog-to-digital converter has a clock signal input port for receiving clock pulses and a control input port, said apparatus further comprising:

coupled to said output port of said sensor (30), means for routing said sensor pulses to said clock signal input port as said clock pulses;

coupled to said clock signal input port, a first counter for counting said clock pulses for each said data segment until said data segment contains data from a number of said clock pulses representing exactly one complete rotation of said shaft (16), and for thereupon providing a first termination signal at an output port of said first counter;

coupled to said output port of said first counter and to said control input port, means for terminating said data segment upon provision of said first termination signal;

coupled to said clock signal input port, a second counter for counting said data segments for each said data record until said data record contains an integral number of said data segments, and for thereupon providing a second termination signal at an output port of said second counter; and

coupled to said output port of said second counter and to said control input port, means for terminating said data record upon provision of said second termination signal.

**19.** An apparatus according to claim 16, adapted to lessen spectral amplitudes of interference at shaft harmonic frequencies in said signal spectrum, relative to other spectral amplitudes, wherein said Fourier Transform processor is configured to perform a Fast Fourier Transform; said apparatus further comprising the following additional elements for processing said digital signals before they reach said Fourier Transform processor:

coupled to said analog-to-digital converter and adapted to receive said digital signals, means for providing a data record consisting of an integral number $n$ of consecutive data segments, each said data segment consisting of an integral number $m$ of consecutive said digital signals, where $n$ and $m$ are each integral powers of two;

coupled to said means for providing a data record, means for making each of said data segments have as a duration a time interval containing exactly one complete rotation of said shaft (16); and

coupled to said means for providing a data record, means for providing said data record to said Fourier Transform processor.

20. An apparatus according to claim 19, wherein said analog-to-digital converter has a clock signal input port for receiving clock pulses and a control input port, said apparatus further comprising:

a pulse multiplier-divider circuit:

having an input port coupled to said output port of said sensor (30) and adapted to receive said sensor pulses therefrom;
having means for multiplying and dividing said sensor pulses' repetition rate; and
providing at an output port of said multiplier-divider circuit a further pulse train in which exactly an integral number $m$ of pulses occurs in each time interval containing exactly one complete rotation of said shaft, where $m$ is an integral power of two;

means for coupling said output port of said multiplier-divider circuit, and for routing said further pulse train to, said clock signal input port of said analog-to-digital converter, thereby providing clock pulses thereat;
coupled to said clock signal input port, a first counter for counting said clock pulses for each said data segment until said data segment contains data from exactly said number $m$ of said pulses, and for thereupon providing a first termination signal at an output port of said first counter;
coupled to said output port of said first counter and to said control input port, means for terminating said data segment upon provision of said first termination signal;
coupled to said clock signal input port, a second counter for counting said data segments for each said data record until said data record contains exactly $m'$ said data segments, where $m'$ is an integral power of two, and for thereupon providing a second termination signal at an output port of said second counter; and
coupled to said output port of said second counter and to said control input port, means for terminating said data record upon provision of said second termination signal.

21. An apparatus according to claim 15, wherein said pulse demodulator (32) comprises a front-end low-pass filter coupled to said output port of said sensor (30), or to a source of a signal derived therefrom, said low-pass filter having a cutoff frequency less than half a predetermined clocking frequency and greater than a predetermined highest frequency component of interest present in said train of sensor pulses, said filter providing at an output port thereof an anti-aliased pulse train; and wherein said apparatus further comprises:

coupled to said output port of said filter and adapted to receive said anti-aliased pulse train, an analog-to-digital converter for providing at an output port thereof digital signals representative of said instantaneous-frequency components present in said instantaneous frequency; and
coupled to said output port of said analog-to-digital converter, means for electronically performing a Fourier Transform spectral analysis on said digital signals, providing a Fourier Transform signal spectrum representative of said instantaneous-frequency components.

22. An apparatus according to claim 21, wherein said analog-to-digital converter has a clock signal input port, said apparatus further comprising:

coupled to said output port of said sensor, or to a source of a signal derived therefrom, unmodulating means for removing from said train of sensor pulses, or from a signal derived therefrom, signal components representative of said modulation of said fundamental frequency of angular rotation, and for providing at an output port of said unmodulating means an unmodulated pulse train;
coupled to said output port of said unmodulating means, an input port of a pulse multiplier for providing at an output port of said pulse multiplier a multiplied unmodulated pulse train; and
coupled to said output port of said pulse multiplier, means for feeding said multiplied unmodulated pulse train to said clock signal input port.

23. An apparatus according to claim 22, wherein said unmodulating means (32) comprises a narrow band-pass filter (70), said filter having a pass band that centers on a mean frequency $f_0$ of said sensor pulses and extends above and below said frequency $f_0$, through frequencies $f_0 + f_1$ to $f_0 - f_1$, where frequency $f_1$ is less than a predetermined frequency $f'$, where said frequency $f'$ is a lowest frequency of interest among said signal components representative of said modulation of said fundamental frequency of angular rotation.

24. An apparatus according to claim 21, wherein said Fourier Transform signal spectrum includes a carrier frequency, a lower sideband frequency, and an upper sideband frequency, each said frequency having complex Fourier Transform components; wherein said apparatus is adapted to reduce interferences by noise and by amplitude modulations in said Fourier Transform spectral analysis; and wherein said electronic processing unit (36) comprises means for combining said complex components of said carrier frequency, said lower sideband frequency, and said upper sideband frequency of said Fourier Transform signal spectrum, to form complex combinations of said complex Fourier Transform components, and for averaging said complex combinations over successive data records.

**25.** An apparatus according to claim 24, wherein said Fourier Transform signal spectrum comprises a set of signal-components, each of which corresponds to one of a set of discrete spectral frequencies spaced from one another by a spectral-frequency interval $k$, each of said signal-components having a spectral amplitude and phase; said apparatus being adapted to separate signal-components in said signal spectrum that are representative of frequency modulation of said fundamental frequency of angular rotation, and signal-components therein representative of amplitude modulation thereof, from one another and from noise; said electronic processing unit (36) of said apparatus comprising:

first means, for extracting from said signal spectrum a first signal representative of spectral phase and amplitude for a first spectral frequency which is that spectral frequency nearest to frequency $\omega_0$, where $\omega_0$ is mean sensor-pulse repetition rate;
coupled to said first means, second means, for extracting from said signal spectrum a second signal representative of spectral phase and amplitude for a second spectral frequency higher than said first spectral frequency by $n$ number of spectral-frequency intervals, where $n$ is an integer and $n \geq 0$, so that said second spectral frequency is it within one spectral-frequency interval of a signal-component frequency $\omega_0 + \omega'$, where $\omega' = nk$;
coupled to said second means, third means, for extracting from said signal spectrum a third signal representative of spectral phase and amplitude for a third spectral frequency less than said first spectral frequency by said n number of spectral-frequency intervals, so that said third spectral frequency is within one spectral-frequency interval of a signal-component frequency $\omega_0 - \omega'$, where $\omega' = nk$; and
coupled to said first means, second means, and third means, further means, for digitally processing said first, second, and third signals to provide a further signal representative of sideband frequencies originating from sources modulating said frequency $\omega_0$.

**26.** An apparatus according to claim 25, in which said further means comprises:

coupled to said first means, fourth means, for providing a fourth signal representative of phase and amplitude of the complex conjugate of the square of said first signal;
coupled to said second means, third means, and fourth means, fifth means, for providing a fifth signal representative of phase and amplitude of the product of said second signal, said third signal, and said fourth signal;
coupled to said fifth means, sixth means, for providing a sixth signal representative of a sum of a set of said fifth signals over a set of $M$ data records, where $M$ is an integer;
coupled to said fifth means, seventh means, for providing a seventh signal representative of the square of the absolute value of said first signal;
coupled to said seventh means, eighth means, for providing an eighth signal representative of a sum of a set of said seventh signals over said set of $M$ data records; and
coupled to said sixth means and said eighth means, ninth means, for providing a ninth signal whose amplitude is representative of said sixth signal divided by said eight signal, said amplitude of said ninth signal also being representative of whether $\omega_0 + \omega'$ and $\omega_0 - \omega'$ are frequencies originating from sources modulating said frequency $\omega_0$.

**27.** An apparatus according to claim 21, wherein said means for performing a Fourier Transform spectral analysis comprises means for forming a power spectrum.

**28.** An apparatus according to claim 15, further comprising:

coupled to said electronic processing unit (36), first means, for providing at a first output port a first signal, representative of an initial value of said resonance-information spectral signals;
coupled to said electronic processing unit (36), second means, for providing at a second output port a second signal, representative of at least one subsequent value of said resonance-information spectral signals; and
coupled to said first output port and said second output port, a comparator for comparing said first signal with said second signal and for providing an output signal representative of whether said first signal and said second signal have a predetermined relationship indicating a shift in said resonance-information spectral signals.

**Patentansprüche**

1. Verfahren zum Messen von Resonanzinformation für zumindest ein rotierendes Element (16, 20, 22, 24, 26) einer Rotationsmaschine (12), wobei die rotierenden Elemente der Rotationsmaschine ein Rotationswellenelement (16) und gegebenenfalls ein oder mehrere rotierende Nicht-Wellenelemente umfasst; worin:

   sich die Rotationselemente (16, 20, 22, 24, 26) mit einer Basis-Winkelrotationsfrequenz um eine Achse drehen;
   zumindest eines der Rotationselemente Oszillationsvibrationen mit zumindest einem Resonanzvibrationsmode aufweist; und
   die Oszillationsvibrationen die Basis-Winkelrotationsfrequenz modulieren, wodurch eine Modulation der Basis-Winkelrotationsfrequenz bewirkt wird;

   wobei das Verfahren folgendes umfaßt:

   (1) das Überwachen der Maschine (12) mit einem Sensor (30), um ein Rotationssignal bereitzustellen, das für die Winkelrotationsfrequenz der Welle repräsentativ ist, wobei der Sensor (30) eine Abfolge von Sensorimpulsen liefert, so dass:

      für jede vollständige Drehung der Welle der Sensor N Sensorimpulse erzeugt, worin N eine positive Ganzzahl ist;
      jeder der N Sensorimpulse für ein Inkrement der Winkelrotation der Welle repräsentativ ist; und
      den Impulsen oder den Abständen dazwischen eine Momentanfrequenz zugeordnet ist;

   (2) das Ableiten eines weiteren Signals vom Rotationssignal, das für die Modulation der Basis-Winkelrotationsfrequenz repräsentativ ist;

   (3) das elektronische Verarbeiten des weiteren Signals, wodurch ein Signalspektrum bereitgestellt wird, das für in der Momentanfrequenz vorhandene Momentanfrequenz-Komponenten repräsentativ ist;

   (4) das elektronische Verarbeiten des Signalspektrums, wodurch für den Resonanzvibrationsmode Resonanzinformation-Spektralsignale bereitgestellt werden, die für Frequenz- und/oder Amplitudencharakteristika repräsentativ sind.

2. Verfahren nach Anspruch 1, worin:

   (a) das weitere Signal vom Rotationssignal abgeleitet wird, indem die Abfolge von Sensorimpulsen einem Frequenz-Spannungs-Wandler (34) zugeführt wird, der als Ausgangsgröße ein analoges Spannungssignal bereitstellt, dessen Amplitude für die Momentanfrequenz repräsentativ ist, wobei das analoge Spannungssignal als das weitere Signal bereitgestellt wird; und

   (b) das weitere Signal verarbeitet wird, um das Signalspektrum abzuleiten, indem

      (i) das analoge Spannungssignal einem Analog-Digital-Wandler zugeführt wird, wobei als Ausgangsgröße davon digitale Signale bereitgestellt werden, die für die in der Momentanfrequenz vorhandenen Momentanfrequenz-Komponenten repräsentativ sind; und
      (ii) an den digitalen Signalen elektronisch eine Fouriertransformations-Spektralanalyse durchgeführt wird, um ein Fouriertransformations-Signal bereitzustellen, das für die Momentanfrequenzkomponenten repräsentativ ist.

3. Verfahren nach Anspruch 2, worin die Fouriertransformation eine diskrete Fouriertransformation ist und Interferenz-Spektralamplituden bei harmonischen Wellenfrequenzen im Signalspektrum in Bezug auf andere Spektualamplituden verringert werden, indem vor der Durchführung der Fouriertransformations-Spektralanalyse die folgenden zusätzlichen Schritte an den digitalen Signalen durchgeführt werden:

   (i) das Bereitstellen einer Datenaufzeichnung, die aus einer ganzzahligen Anzahl von n aufeinanderfolgenden Datensegmenten besteht, wobei jedes Datensegment aus einer ganzzahligen Anzahl von m aufeinanderfolgenden digitalen Signalen besteht; und

(ii) das Erstellen eines jeden der Datensegmente als Dauer einen Zeitintervall hat, der genau eine vollständige Drehung der Welle (16) umfaßt.

4. Verfahren nach Anspruch 3, worin der Analog-Digital-Wandler getaktet ist und die Länge der Datenaufzeichnung gesteuert wird durch:

(a) das Lenken der Sensorimpulse zu einem Taktsignal-Eingang des Analog-Digital-Wandlers, wodurch Taktimpulse bereitgestellt werden;

(b) das Zählen der Taktimpulse für jedes Datensegment, bis das Datensegment Daten von einer Anzahl der Taktimpulse enthält, die genau eine vollständige Drehung der Welle repräsentiert, und daraufhin das Abschließen des Datensegments; und

(c) das Zählen der Datensegmente für jede Datenaufzeichnung, bis die Datenaufzeichnung eine ganzzahlige Anzahl von Datensegmenten enthält, und daraufhin das Beenden der Datenaufzeichnung.

5. Verfahren nach Anspruch 2, worin die Fourier-Transformation eine schnelle Fourier-Transformation ist und Interferenzspektralamplituden bei harmonischen Wellenfrequenzen im Signalspektrum in Bezug auf andere Spektralamplituden vermindert werden, indem vor der Fourier-Transformations-Spektralanalyse an den digitalen Signalen die folgenden Schritte durchgeführt werden:

(i) das Bereitstellen einer Datenaufzeichnung, die genau aus einer ganzzahligen Anzahl n an aufeinanderfolgenden Datensegmenten besteht, wobei jedes Datensegment aus genau einer ganzzahligen Anzahl m aufeinanderfolgender Datensignale besteht, worin n und m jeweils ganzzahlige Quadratzahlen sind; und

(ii) das Bewirken, dass jedes der Datensegmente als Dauer ein Zeitintervall aufweist, das genau eine vollständige Drehung der Welle umfaßt.

6. Verfahren nach Anspruch 5, worin der Analog-Digital-Wandler getaktet ist und die Länge der Datanaufzeichnung gesteuert wird durch:

(a) das Lenken der Sensorimpulse zu einem Signaleingang einer Impuls-Multiplikations-Divisions-Schaltung, das Multiplizieren und Dividieren der Impulswiederholungsrate der Sensorimpulse, und das Bereitstellen einer weiteren Impulsabfolge an einem Ausgang der Multiplikations-Divisions-Schaltung, bei der in jedem Zeitintervall, das genau eine vollständige Drehung der Welle umfaßt, genau eine ganzzahlige Anzahl m an Impulsen auftritt, wobei m eine ganzzahlige Quadratzahl ist;

(b) das Lenken der weiteren Impulsabfolge zu einem Taktsignaleingang des Analog-Digital-Wandlers, so dass dort Taktimpulse bereitgestellt werden;

(c) das Zählen der Taktimpulse für jedes Datensegment, bis das Datensegment Daten von genau der Anzahl m an Taktimpulsen enthält, und daraufhin das Abschließen des Datensegments; und

(d) das Zählen der Datensegmente für jede Datenaufzeichnung, bis die Datenaufzeichnung genau m Datensegmente enthält, und daraufhin das Beenden der Datenaufzeichnung, wobei m eine ganzzahlige Quadratzahl ist.

7. Verfahren nach Anspruch 1, worin:

(a) das weitere Signal vom Rotationssignal abgeleitet wird, indem die Abfolge an Sensorimpulsen oder ein davon abgeleitetes Signal einem Tiefpassfilter zugeführt wird, dessen Grenzfrequenz geringer als die Hälfte einer vorbestimmten Taktungsfrequenz ist und größer als eine vorbestimmte höchste Frequenzkomponente von Interesse ist, die in der Abfolge von Sensorimpulsen vorhanden ist, so dass als Ausgangsgröße des Filters eine Antialiasing-gefilterte Impulsabfolge bereitgestellt wird; und

(b) das weitere Signal verarbeitet wird, um das Signalspektrum abzuleiten, indem:

(i) die Antialiasing-gefilterte Impulsabfolge einem Analog-Digital-Wandier zugeführt wird, wobei als dessen Ausgang digitale Signale bereitgestellt werden, die für die in der Momentanfrequenz vorhandenen Momentanfrequenz-Komponenten repräsentativ sind; und

(ii) an den digitalen Signalen elektronisch eine Fourier-Transformations-Spektralanalyse durchgeführt wird, wodurch ein Fourier-Transformations-Signalspektrum bereitgestellt wird, das für die Momentanfrequenz-Komponenten repräsentativ ist.

8. Verfahren nach Anspruch 7, worin der Analog-Digital-Wandler einen Taktungssignaleingang aufweist, dem ein Taktungssignal zugeführt wird, und das Taktungssignal erhalten wird durch:

(a) das Eliminieren von Signalkomponenten, die für die Modulation der Basis-Winkelrotationsfrequenz repräsentativ sind, aus der Abfolge von Sensorimpulsen oder aus einem davon abgeleiteten Signal, wodurch eine unmodulierte Impulsabfolge bereitgestellt wird;

(b) das Zuführen der unmodulierten Impulsabfolge zu einem Impulsmultiplikator, der als seine Ausgangsgröße eine multiplizierte unmodulierte Impulsabfolge bereitstellt; und

(c) das Zuführen der multiplizierten unmodulierten Impulsabfolge als Taktungssignal zum Taktsignaleingang und das Takten des Analog-Digital-Wandlers damit.

9. Verfahren nach Anspruch 8, worin Schritt (a) durchgeführt wird, indem die Abfolge von Sensorimpulsen durch ein schmales Bandpassfilter hindurchgeschickt wird, das einen Durchlassbereich aufweist, dessen Mitte sich auf einer mittleren Frequenz $f_0$ der Sensorimpulse befindet und der sich über Frequenzen $f_0+f_1$ bis $f_0-f_1$ oberhalb und unterhalb der Frequenz $f_0$ erstreckt, wobei $f_1$ geringer als eine vorbestimmte Frequenz f' ist, wobei die Frequenz f' eine niedrigste Frequenz von Interesse unter den Signalkomponenten ist, die für die Modulation der Basis-Winkelrotationsfrequenz repräsentativ sind.

10. Verfahren nach Anspruch 7, worin das Fourier-Transformations-Signalspekrrum eine Trägerfrequenz, eine untere Seitenbandfrequenz und eine obere Seitenbandfrequenz umfaßt, wobei jede Frequenz komplexe Fourier-Transformations-Komponenten aufweist, und worin Interferenzen durch Rauschen und durch Amplitudenmodulationen nach der Fourier-Transformations-Spektralanalyse verringert wurden durch:

(a) das Kombinieren der komplexen Komponenten der Trägerfrequenz, der unteren Seitenbandfrequenz und der oberen Seitenbandfrequenz, um komplexe Kombinationen aus den komplexen Fourier-Transformations-Komponenten zu bilden; und

(b) die Durchschnittsbildung der komplexen Kombinationen über aufeinanderfolgende Datenaufzeichnungen hinweg.

11. Verfahren nach Anspruch 10, worin das Fourier-Transformations-Signalspektrum einen Satz Signalkomponenten umfaßt, von denen jede einem Satz diskreter Spektralfrequenzen entspricht, die voneinander um ein Spektralfrequenzintervall k beabstandet sind, wobei jede der Signalkomponenten eine Spektralamplitude und -phase aufweist; wobei das Verfahren dafür angepasst ist, (i) Signalkomponenten im Signalspektrum, die für eine Frequenzmodulation der Basis-Winkelrotationsfrequenz repräsentativ sind, und (ii) Signalkomponenten darin, die für Amplitudenmodulation der Basis-Winkelrotationsfrequenz repräsentativ sind, voneinander und von Rauschen zu trennen; wobei das Verfahren umfaßt:

(a) das Auskoppeln eines ersten Signals, das für eine Spektralphase und -amplitude für eine erste Spektralfrequenz repräsentativ ist, wobei es sich um jene Spektralfrequenz handelt, die der Frequenz $\omega_0$ am nächsten liegt, wobei $\omega_0$ eine mittlere Wiederholungsrate von Sensorimpulsen ist, aus dem Signalspektrum;

(b) das Auskoppeln eines zweiten Signals, das für eine Spektralphase und -amplitude für eine zweite Spektralfrequenz repräsentativ ist, die um eine Anzahl n an Spektralfrequenzintervallen höher als die erste Spektralfrequenz ist, wobei n eine Ganzzahl ist und $n \geq 0$, so dass die zweite Spektralfrequenz innerhalb eines Spektralfrequenzintervalls einer Signalkomponentenfrequenz $\omega_0 + \omega'$ liegt, worin $\omega'$ gleich nk ist, aus dem Signalspektrum;

(c) das Auskoppeln eines für eine Spektralphase und -amplitude für eine dritte Spektralfrequenz repräsentativen dritten Signals, die um die Anzahl n an Spektralfrequenzintervallen geringer ist als die erste Spektralfrequenz, so dass diese dritte Spektralfrequenz innerhalb eines Spektralfrequenzintervalls einer Signalkomponentenfrequenz $\omega_0 - \omega'$ liegt, worin $\omega'$ gleich nk ist; und

(d) das digitale Verarbeiten des ersten, des zweiten und des dritten Signals, um ein weiteres Signal bereitzustellen, das für Seitenbandfrequenzen repräsentativ ist, die von Quellen stammen, die die Frequenz $\omega_0$ modulieren.

**12.** Verfahren nach Anspruch 11, bei dem Schritt (d) die folgenden Schritte umfaßt:

(a) das Bereitstellen eines vierten Signals, das für Phase und Amplitude eines komplex konjugierten Quadrats des ersten Signals repräsentativ ist;

(b) das Bereitstellen eines fünften Signals, das für Phase und Amplitude eines Produkts aus dem zweiten Signal, dem dritten Signal und dem vierten Signal repräsentativ ist;

(c) das Bereitstellen eines sechsten Signals, das für eine Summe aus den fünften Signalen über einen Satz von M Datenaufzeichnungen repräsentativ ist, wobei M eine Ganzzahl ist;

(d) das Bereitstellen eines siebten Signals, das für ein Quadrat eines absoluten Werts des ersten Signals repräsentativ ist;

(e) das Bereitstellen eines achten Signals, das für eine Summe aus den siebten Signalen über den Satz vom M Datenaufzeichnungen repräsentativ ist; und

(f) das Bereitstellen eines neunten Signals, dessen Amplitude für das sechste Signal, dividiert durch das achte Signal, repräsentativ ist, wobei die Amplitude des neunten Signals auch dafür repräsentativ ist, ob $\omega_0 + \omega'$ und $\omega_0 - \omega'$ Frequenzen sind, die von Quellen stammen, die die Frequenz $\omega_0$ modulieren.

**13.** Verfahren nach Anspruch 7, worin die Fourier-Transformations-Spektralanalyse in der Bildung eines Leistungsspektrums besteht.

**14.** Verfahren nach Anspruch 1, worin nach den Schritten 1 bis 4 die folgenden zusätzlichen Schritte stattfinden:

(a) das Bereitstellen eines für einen Anfangswert der Resonanzinformation für zumindest eines der Rotationselemente der Maschine repräsentativen ersten Signals;

(b) das Bereitstellen eines für zumindest einen nachfolgenden Wert der Resonanzinformation für die Rotationselemente repräsentativen zweiten Signals; und

(c) das Vergleichen des ersten Signals mit dem zweiten Signal und das Bereitstellen eines Ausgangssignals, das dafür repräsentativ ist, ob das erste Signal und das zweite Signal eine vorbestimmte Beziehung aufweisen, die eine Verlagerung in der Resonanzinformation anzeigt.

**15.** Vorrichtung (14) zum Messen von Resonanzinformation für zumindest ein rotierendes Element (16, 20, 22, 24, 26) einer Rotationsmaschine (12), wobei die rotierenden Elemente der Rotationsmaschine ein Rotationswellenelement (16) und gegebenenfalls ein oder mehrere rotierende Nicht-Wellenelemente umfassen; worin:

sich die Rotationselemente (16, 20, 22, 24, 26) mit einer Basis-Winkelrotationsfrequenz um eine Achse drehen;
zumindest eines der Rotationselemente Oszillationsvibrationen mit zumindest einem Resonanzvibrationsmode aufweist; und
die Oszillationsvibrationen die Basis-Winkelrotationsfrequenz modulieren, wodurch eine Modulation der Basis-Winkelrotationsfrequenz bewirkt wird;

wobei die Vorrichtung folgendes umfaßt:

an die Rotationsmaschine (12) gekoppelt einen Sensor (30), um an einem Ausgang davon ein Rotationssignal bereitzustellen, das für die Winkelrotationsfrequenz der Welle repräsentativ ist, wobei der Sensor am Ausgang eine Abfolge von Sensorimpulsen bereitstellt, so dass:

der Sensor (30) für jede vollständige Drehung der Welle (16) N Sensorimpulse erzeugt, wobei N eine positive Ganzzahl ist;
jeder der N Sensorimpulse für ein Winkelrotationsinkrement durch die Welle (16) repräsentativ ist; und
den Impulsen oder Abständen dazwischen eine Momentanfrequenz zugeordnet ist;

an den Ausgang des Sensors (30) gekoppelt einen Impulsdemodulator (32), um vom Rotationssignal ein weiteres Signal abzuleiten, das für die Modulation der Basis-Winkelrotationsfrequenz repräsentativ ist, und es an einem Ausgang des Impulsdemodulators bereitzustellen;

an den Ausgang des Impulsdemodulators (32) gekoppelt eine elektronische Verarbeitungseinheit (36), die Mittel aufweist:

zur elektronischen Verarbeitung des weiteren Signals, wodurch daraus ein Signalspektrum bereitgestellt wird, das für Momentanfrequenz-Komponenten in der Momentanfrequenz repräsentativ ist; und
zur elektronischen Verarbeitung des Signalspektrums, wodurch daraus für den Resonanzvibrationsmode Resonanzinformation-Spektralsignale bereitgestellt werden, die für Frequenz- und/oder Amplitudencharakteristika repräsentativ sind.

16. Vorrichtung nach Anspruch 15, worin

der Impulsdemodulator einen Frequenz-Spannungs-Wandler (34) umfaßt, der einen Eingang, dem die Abfolge von Sensorimpulsen zugeführt wird, und einen Ausgang aufweist, der an den Ausgang des Impulsdemodulators gekoppelt ist, wobei die Ausgänge ein analoges Spannungssignal mit einer für die Momentanfrequenz repräsentativen Amplitude bereitstellen; und

die elektronische Verarbeitungseinheit (36) umfasst:

einen Analog-Digital-Wandler zum Umwanden des analogen Spannungssignals in digitale Signale, wobei die digitalen Signale für die in der Momentanfrequenz vorhandenen Momentanfrequenz-Komponenten repräsentativ sind; und

einen Fouriertransformations-Prozessor zur elektronischen Durchführung einer Fouriertransformations-Spektralanalyse an den digitalen Signalen, um ein Fouriertransformations-Signalspektrum bereitzustellen, wobei das Signalspektrum für die Momentanfrequenz-Komponenten repräsentativ ist.

17. Vorrichtung nach Anspruch 16, ausgebildet zur Verminderung der Interferenzspektralamplituden bei harmonischen Wellenfrequenzen im Signalspektrum in Bezug auf andere Spektralamplituden, worin der Fourier-Transformations-Prozessor zur Durchführung einer diskreten Fourier-Transformation konfiguriert ist, wobei die Vorrichtung weiters die folgenden zusätzlichen Elemente umfaßt um die digitalen Signale zu verarbeiten, bevor sie den Fourier-Transformations-Prozessor erreichen:

gekoppelt an den Analog-Digital-Wandler und ausgebildet zum Empfangen der digitalen Signale, Mittel zum Bereitstellen einer Datenaufzeichnung, die aus einer ganzzahligen Anzahl n an aufeinanderfolgenden Datensegmenten besteht, wobei jedes Datensegment aus einer ganzzahligen Anzahl m aufeinanderfolgender digitaler Signale besteht; und

gekoppelt an das Mittel zum Bereitstellen einer Datenaufzeichnung, Mittel, um zu bewirken, dass jedes der Datensegmente als Dauer ein Zeitintervall aufweist, das genau eine vollständige Drehung der Welle (16) umfaßt; und

gekoppelt an das Mittel zum Bereitstellen einer Datenaufzeichnung, Mittel, um die Datenaufzeichnung dem Fourier-Transformations-Prozessor zuzuführen.

18. Vorrichtung nach Anspruch 17, worin der Analog-Digital-Wandler einen Taktsignaleingang zum Aufnehmen von Taktimpulsen und einen Steuerungseingang aufweist, wobei die Vorrichtung weiters umfaßt:

gekoppelt an den Ausgang des Sensors (30), Mittel, um die Sensorimpulse als Taktimpulse zum Taktsignaleingang zu leiten;

gekoppelt an den Taktsignaleingang, einen ersten Zähler zum Zählen der Taktimpulse für jedes Datensegment, bis das Datensegment Daten von einer Anzahl der Taktimpulse enthält, die genau eine vollständige Drehung der Welle (16) repräsentiert, und um daraufhin an einem Ausgang des ersten Zählers ein erstes Beendigungssignal zu liefern;

gekoppelt an den Ausgang des ersten Zählers und an den Steuerungseingang, Mittel zum Abschießen des Datensegments nach dem Bereitstellen des ersten Beendigungssignals;

gekoppelt an den Taktsignaleingang, einen zweiten Zähler zum Zählen der Datensegmente für jede Datenaufzeichnung, bis die Datenaufzeichnung eine ganzzahlige Anzahl der Datensegmente enthält, und um daraufhin an einem Ausgang des zweiten Zählers ein zweites Beendigungssignal zu liefern; und

gekoppelt an den Ausgang des zweiten Zählers und an den Steuerungseingang, Mittel zum Beenden der Datenaufzeichnung nach dem Bereitstellen des zweiten Beendigungssignals.

19. Vorrichtung nach Anspruch 16, ausgebildet zur Verminderung der Interferenz-Spektralamplituden bei harmonischen Wellenfrequenzen im Signalspektrum in Bezug auf andere Spektralamplituden, worin der Fourier-Transformations-Prozessor so konfiguriert ist, dass er eine schnelle Fourier-Transformation durchführt; wobei die Vorrichtung weiters die folgenden zusätzlichen Elemente umfasst, um die digitalen Signale zu verarbeiten, bevor sie den Fourier-Transformations-Prozessor erreichen:

gekoppelt an den Analog-Digital-Wandler und ausgebildet zum Empfangen der digitalen Signale, Mittel zum Bereitstellen einer Datenaufzeichnung, die aus einer ganzzahligen Anzahl n aufeinanderfolgender Datensegmente besteht, wobei jedes Datensegment aus einer ganzzahligen Anzahl m aufeinanderfolgender digitaler Signale besteht, worin n und m jeweils ganzzahlige Quadratzahlen sind;

gekoppelt an das Mittel zum Bereitstellen einer Datenaufzeichnung, Mittel um zu Bewirken, dass jedes der Datensegmente als Dauer ein Zeitintervall aufweist, das genau eine vollständige Drehung der Welle (16) umfaßt; und

gekoppelt an das Mittel zum Bereitstellen einer Datenaufzeichnung, Mittel um die Datenaufzeichnung dem Fourier-Transformations-Prozessor zuzuführen.

20. Vorrichtung nach Anspruch 19, worin der Analog-Digital-Wandler einen Taktsignaleingang zum Empfangen von Taktimpulsen und einen Steuerungseingang umfasst, wobei die Vorrichtung weiters umfasst:

eine Impuls-Multiplikations-Divisions-Schaltung:

die einen an den Ausgang des Sensors (30) gekoppelten und zum Empfangen der Sensorimpulse davon ausgebildeten Eingang aufweist;

die Mittel zum Multiplizieren und Dividieren der Wiederholungsrate der Sensorimpulse aufweist; und

die am Ausgang der Multiplikations-Divisions-Schaltung eine weitere Impulsabfolge bereitstellt, bei der in jedem Zeitintervall, das genau eine vollständige Drehung der Welle umfasst, genau eine ganzzahlige Anzahl m von Impulsen auftritt, wobei m eine ganzzahlige Quadratzahl ist;

Mittel, um den Ausgang der Multiplikations-Divisions-Schaltung an den Taktsignaleingang des Analog-Digital-Wandlers zu koppeln und die weitere Impulsabfolge zum Taktsignaleingang hin zu leiten, wodurch dort Taktimpulse bereitgestellt werden;

gekoppelt an den Taktsignaleingang, einen ersten Zähler, um die Taktimpulse für jedes Datensegment zu zählen, bis das Datensegment Daten von genau der Anzahl m der Impulse enthält, und um daraufhin an einem Ausgang des ersten Zählers ein erstes Beendigungssignal zu liefern;

gekoppelt an den Ausgang des ersten Zählers und an den Steuerungseingang, Mittel zum Abschließen des Datensegments auf das Bereitstellen des ersten Beendigungssignals hin;

gekoppelt an den Takteingang, einen zweiten Zähler zum Zählen der Datensegmente für jede Datenaufzeichnung, bis die Datenaufzeichnung genau m' Datensegmente enthält, wobei m' eine ganzzahlige Quadratzahl ist, und um daraufhin ein zweites Beendigungssignal an einem Ausgang des zweiten Zählers bereitzustellen; und

gekoppelt an den Ausgang des zweiten Zählers und an den Steuerungseingang, Mittel zum Beenden der Datenaufzeichnung auf das Bereitstellen des zweiten Beendigungssignals hin.

21. Vorrichtung nach Anspruch 15, worin der Impulsdemodulator (32) ein eingangsseitiges Tiefpassfilter umfasst, das an den Ausgang des Sensors (30) oder an eine Quelle eines davon abgeleiteten Signals gekoppelt ist, wobei das Tiefpassfilter eine Grenzfrequenz aufweist, die geringer als die Hälfte einer vorbestimmten Taktfrequenz und größer als eine vorbestimmte höchste Frequenzkomponente von Interesse ist, die in der Abfolge von Sensorimpulsen vorhanden ist, wobei das Filter an seinem Ausgang eine Antialiasing-gefilterte Impulsabfolge bereitstellt; und worin die Vorrichtung weiters umfasst:

gekoppelt an den Ausgang des Filters und zum Empfangen der Antialiasing-gefilterten Impulsfrequenz ausgebildet, einen Analog-Digital-Wandler, um an seinem Ausgang digitale Signale bereitzustellen, die für die in der Momentanfrequenz vorhandenen Momentanfrequenz-Komponenten repräsentativ sind; und

gekoppelt an den Ausgang des Analog-Digital-Wandlers Mittel zur elektronischen Durchführung einer Fourier-Transformations-Spektralanalyse an den digitalen Signalen, wodurch ein Fourier-Transformations-Signalspektrum bereitgestellt wird, das für die Momentanfrequenz-Komponenten repräsentativ ist.

22. Vorrichtung nach Anspruch 21, worin der Analog-Digital-Wandler einen Taktsignaleingang aufweist, wobei die Vorrichtung weiters umfasst:

gekoppelt an den Ausgang des Sensors oder an eine Quelle eines davon abgeleiteten Signals, unmodulierende Mittel, um aus der Abfolge von Sensorimpulsen oder aus einem davon abgeleiteten Signal Signalkomponenten zu eliminieren, die für die Modulation der Basis-Winkelrotationsfrequenz repräsentativ sind und um an einem Ausgang des unmodulierenden Mittels eine unmodulierte Impulsabfolge bereitzustellen;

gekoppelt an den Ausgang des unmodulierenden Mittels, einen Eingang eines Impulsmultiplikators, um an einem Ausgang des Impulsmultiplikators eine multiplizierte unmodulierte Impulsabfolge bereitzustellen; und

gekoppelt an den Ausgang des Impulsmultiplikators, Mittel, um die multiplizierte unmodulierte Impulsabfolge dem Taktsignal-Eingang zuzuführen.

23. Vorrichtung nach Anspruch 22, worin das unmodulierende Mittel (32) ein schmales Bandpassfilter (70) umfasst, wobei das Filter einen Durchlassbereich aufweist, dessen Mitte sich auf einer mittleren Frequenz $f_0$ der Sensorimpulse befindet und der sich über Frequenzen $f_0 + f_1$ bis $f_0 - f_1$ oberhalb und unterhalb der Frequenz $f_0$ erstreckt, wobei $f_1$ geringer als eine vorbestimmte Frequenz f' ist, wobei die Frequenz f' eine niedrigste Frequenz von Interesse unter den Signalkomponenten ist, die für die Modulation der Basis-Winkelrotationsfrequenz repräsentativ sind.

24. Vorrichtung nach Anspruch 21, worin das Fourier-Transformations-Signalspektrum eine Trägerfrequenz, eine untere Seitenbandfrequenz und eine obere Seitenbandfrequenz umfasst, wobei jede Frequenz komplexe Fourier-Transformations-Komponenten aufweist; worin die Vorrichtung so ausgebildet ist, dass sie Interferenzen durch Rauschen und durch Amplitudenmodulationen in der Fourier-Transformations-Spektralanalyse verringert; und worin die elektronische Verarbeitungseinheit (36) Mittel umfasst, um die komplexen Komponenten der Trägerfrequenz, der unteren Seitenbandfrequenz und der oberen Seitenbandfrequenz des Fourier-Transformations-Signalspektrum zu kombinieren, um komplexe Kombinationen aus den komplexen Fourier-Transformations-Komponenten zu bilden und die komplexen Kombinationen über aufeinanderfolgende Datenaufzeichnungen zu mitteln.

25. Vorrichtung nach Anspruch 24, worin das Fourier-Transformations-Signalspektrum einen Satz Signalkomponenten umfasst, von denen jede einem Satz diskreter Spektralfrequenzen entspricht, die voneinander in einem Spektralfrequenzintervall k beabstandet sind, wobei jede der Signalkomponenten eine Spektralamplitude und -phase aufweist; wobei die Vorrichtung dazu ausgebildet ist, Signalkomponenten im Signalspektrum, die für Frequenzmodulation der Basis-Winkelrotationsfrequenz repräsentativ sind, und Signalkomponenten darin, die für ihre Amplitudenmodulation repräsentativ sind, voneinander und von Rauschen zu trennen; wobei die elektronische Verarbeitungseinheit (36) der Vorrichtung umfasst:

erste Mittel zum Auskoppeln eines ersten Signals, das für eine Spektralphase und -amplitude für eine erste Spektralfrequenz repräsentativ ist, wobei es sich um jene Spektralfrequenz handelt, die der Frequenz $\omega_0$ am nächsten liegt, wobei $\omega_0$ eine mittlere Wiederholungsrate von Sensorimpulsen ist, aus dem Signalspektrum;

gekoppelt an das erste Mittel, zweite Mittel zum Auskoppeln eines zweiten für eine Spektralphase und -amplitude für eine zweite Spektralfrequenz repräsentativen zweiten Signals, die um eine Anzahl n an Spektralfrequenzintervallen höher als die erste Spektralfrequenz ist, wobei n eine Ganzzahl ist und $n \geq 0$ so dass die zweite Spektralfrequenz innerhalb eines Spektralfrequenzintervalls einer Signalkomponentenfrequenz $\omega_0 + \omega'$ liegt, worin $\omega'$ gleich nk ist, aus dem Signalspektrum;

gekoppelt an das zweite Mittel, dritte Mittel zum Auskoppeln eines für eine Spektralphase und -amplitude für eine dritte Spektralfrequenz repräsentativen dritten Signals, das um die Anzahl n an Spektralfrequenzintervallen geringer ist als die erste Spektralfrequenz, so dass diese dritte Spektralfrequenz innerhalb eines Spektralfrequenzintervalls einer Signalkomponentenfrequenz $\omega_0 - \omega'$ liegt, worin $\omega'$ gleich nk ist; und

gekoppelt an das erste Mittel, das zweite Mittel und das dritte Mittel, weitere Mittel zum digitale Verarbeiten des ersten, des zweiten und des dritten Signals, um ein weiteres Signal bereitzustellen, das für Seitenbandfrequenzen repräsentativ ist, die von Quellen stammen, die die Frequenz $\omega_0$ modulieren.

26. Vorrichtung nach Anspruch 25, in der die weiteren Mittel umfassen:

gekoppelt an das erste Mittel, vierte Mittel, um ein viertes Signal bereitzustellen, das für Phase und Amplitude des komplex konjugierten Quadrats des ersten Signals repräsentativ ist;

gekoppelt an das zweite Mittel, dritte Mittel und vierte Mittel, fünfte Mittel zum Bereitstellen eines fünften Signals, das für Phase und Amplitude des Produktes aus dem zweiten Signal, dem dritten Signal und dem vierten Signal repräsentativ ist;

gekoppelt an das fünfte Mittel, sechste Mittel, um ein sechstes Signal bereitzustellen, das für eine Summe aus einem Satz der fünften Signal über einem Satz von M Datenaufzeichnungen repräsentativ ist, wobei M eine Ganzzahl ist;

gekoppelt an das fünfte Mittel, siebente Mittel, um ein siebentes Signal bereitzustellen, das für das Quadrat des absoluten Werts des ersten Signals repräsentativ ist;

gekoppelt an das siebente Mittel, achte Mittel zum Bereitstellen eines achten Signals, das für eine Summe aus einem Satz der siebenten Signale über den Satz von M Datenaufzeichnungen repräsentativ ist; und

gekoppelt an das sechste Mittel und das achte Mittel, neunte Mittel zum Bereitstellen eines neunten Signals, dessen Amplitude für das sechste Signal dividiert durch das achte Signal repräsentativ ist, wobei die Amplitude des neunten Signals auch dafür repräsentativ ist, ob $\omega_0 + \omega'$ und $\omega_0 - \omega'$ Frequenzen sind, die von Quellen stammen, die die Frequenz $\omega_0$ modulieren.

27. Vorrichtung nach Anspruch 21, worin das Mittel zur Durchführung einer Fourier-Transformations-Spektralanalyse Mittel zur Bildung eines Leistungsspektrums umfasst.

28. Vorrichtung nach Anspruch 15, weiters umfassend:

gekoppelt an die elektronische Bearbeitungseinheit (36) erste Mittel, um an einem ersten Ausgang ein erstes Signal bereitzustellen, das für einen Anfangswert der Resonanzinformation-Spektralsignale repräsentativ ist;

gekoppelt an die elektronische Bearbeitungseinheit (36) zweite Mittel, um an einem zweiten Ausgang ein zweites Signal bereitzustellen, das für zumindest einen nachfolgenden Wert der Resonanzinformation-Spektralsignale repräsentativ ist; und

gekoppelt an den ersten Ausgang und den zweiten Ausgang, eine Vergleicherschaltung, um das erste Signal mit dem zweiten Signal zu vergleichen und um ein Ausgangssignal bereitzustellen, das dafür repräsentativ ist, ob das erste Signal und das zweite Signal eine vorbestimmte Beziehung aufweisen, die eine Verlagerung in den Resonanzinformation-Spektralsignalen anzeigt.

**Revendications**

1. Procédé de mesure d'informations de résonance concernant au moins un élément rotatif (16, 20, 22, 24, 26) d'une machine tournante (12), lesdits éléments rotatifs de la machine tournante comportant un élément d'arbre rotatif (16) et facultativement un ou plusieurs éléments rotatifs différents de l'arbre, dans lequel:

   lesdits éléments rotatifs (16, 20, 22, 24, 26) tournent autour d'un axe à une fréquence fondamentale de rotation angulaire;
   au moins l'un desdits éléments rotatifs présente des vibrations oscillantes présentant au moins un mode de vibration de résonance; et
   lesdites vibrations oscillantes modulent ladite fréquence fondamentale de rotation angulaire en provoquant une modulation de ladite fréquence fondamentale de rotation angulaire;

   ledit procédé comportant les étapes consistant à :

   (1) surveiller ladite machine (12) à l'aide d'un capteur (30) pour délivrer un signal de rotation représentatif de ladite fréquence de rotation angulaire de l'arbre, ledit capteur (30) délivrant un train d'impulsions de capteur de telle sorte que:

      pour chaque tour complet dudit arbre, le capteur génère $N$ impulsions de capteur, $N$ étant un entier positif;
      chacune desdites $N$ impulsions de capteur est représentative d'un incrément de rotation angulaire dudit arbre; et
      lesdites impulsions, ou les intervalles qui les séparent, présentent une fréquence instantanée qui leur est associée;

   (2) à partir dudit signal de rotation, dériver un autre signal qui est représentatif de ladite modulation de ladite fréquence fondamentale de rotation angulaire;
   (3) traiter électroniquement ledit autre signal en délivrant à partir de lui un spectre du signal représentatif de composantes de fréquence instantanée présentes dans ladite fréquence instantanée; et
   (4) traiter électroniquement ledit spectre du signal en délivrant à partir de lui des signaux spectraux d'information de résonance représentatifs de caractéristiques de fréquence, d'amplitude ou des deux dudit mode de vibration de résonance.

2. Procédé selon la revendication 1, dans lequel :

   (a) ledit autre signal est dérivé dudit signal de rotation en introduisant ledit train d'impulsions du capteur dans un convertisseur fréquence-tension (34) qui délivre comme sortie un signal analogique de tension dont l'amplitude est représentative de ladite fréquence instantanée, ledit signal analogique de tension étant délivré en tant que ledit autre signal; et
   (b) ledit autre signal est traité en vue d'en dériver ledit spectre du signal par les opérations consistant à :

      (i) appliquer ledit signal analogique de tension sur un convertisseur analogique-numérique, délivrer comme sortie de ce dernier des signaux numériques représentatifs desdites composantes de fréquence instantanée présentes dans ladite fréquence instantanée; et
      (ii) effectuer électroniquement une analyse spectrale par transformée de Fourier desdits signaux numériques, délivrer un spectre du signal par transformée de Fourier, représentatif desdites composantes de fréquence instantanée.

3. Procédé selon la revendication 2, dans lequel ladite transformée de Fourier est une transformée de Fourier discrète, et dans lequel les amplitudes spectrales des interférences aux fréquences harmoniques de l'arbre dudit spectre du signal sont affaiblies par rapport à d'autres amplitudes spectrales en exécutant les étapes supplémentaires ci-dessous avant d'effectuer ladite analyse spectrale par transformée de Fourier desdits signaux numériques :

(i) délivrer un enregistrement de données constitué d'un nombre entier $n$ de segments consécutifs de données, chacun desdits segments de données étant constitué d'un nombre entier $m$ desdits signaux numériques consécutifs; et
(ii) donner à chacun desdits segments de données une durée correspondant à un intervalle de temps contenant exactement un tour complet dudit arbre (16).

4. Procédé selon la revendication 3, dans lequel ledit convertisseur analogique-numérique est cadencé par horloge, et la longueur dudit enregistrement de données est commandée par les étapes consistant à :

(a) amener lesdites impulsions de capteur à une porte d'entrée de signal d'horloge dudit convertisseur analogique-numérique, pour délivrer des impulsions d'horloge;
(b) compter lesdites impulsions d'horloge pour chacun desdits segments de données jusqu'à ce que ledit segment de données contienne des données d'un nombre desdites impulsions d'horloge qui représente exactement un tour complet dudit arbre, et interrompre alors ledit segment de données; et
(c) compter lesdits segments de données de chacun desdits enregistrements de données jusqu'à ce que ledit enregistrement de données contiennent un nombre entier desdits segments de données, et ensuite interrompre ledit enregistrement de données.

5. Procédé selon la revendication 2, dans lequel ladite transformée de Fourier est une transformée de Fourier rapide et les amplitudes spectrales d'interférence auxdites fréquences harmoniques dudit spectre du signal sont affaiblies par rapport à d'autres amplitudes spectrales en exécutant les étapes ci-dessous avant d'effectuer sur lesdits signaux numériques l'analyse spectrale par transformée de Fourier :

(i) délivrer un enregistrement de données constitué exactement d'un nombre entier $n$ de segments consécutifs de données, chacun desdits segments de données étant constitué d'exactement un nombre entier $m$ desdits signaux numériques consécutifs, $n$ et $m$ étant chacun des puissances entières de 2; et
(ii) donner à chacun desdits segments de données une durée représentant un intervalle de temps contenant exactement un tour complet dudit arbre.

6. Procédé selon la revendication 5, dans lequel ledit convertisseur analogique-numérique est cadencé par horloge, et la longueur dudit enregistrement de données est commandée par les étapes consistant à :

(a) amener lesdites impulsions de capteur à une porte d'entrée de signaux d'un circuit multiplicateur-diviseur d'impulsions, multiplier et diviser le taux de répétition desdites impulsions de capteur et délivrer sur une porte de sortie dudit circuit multiplicateur-diviseur un autre train d'impulsions dans lequel exactement un nombre entier $m$ d'impulsions apparaît dans chaque intervalle de temps contenant exactement un tour complet dudit arbre, $m$ étant une puissance entière de 2;
(b) amener ledit autre train d'impulsions à une porte d'entrée de signal d'horloge dudit convertisseur analogique-numérique pour y délivrer des impulsions d'horloge;
(c) compter lesdites impulsions d'horloge pour chacun desdits segments de données jusqu'à ce que ledit segment de données contienne des données d'exactement ledit nombre $m$ d'impulsions d'horloge et alors interrompre ledit segment de données; et
(d) compter lesdits segments de données de chacun desdits enregistrements de données jusqu'à ce que ledit enregistrement de données contienne exactement $m'$ desdits segments de données, et interrompre alors ledit enregistrement de données, $m'$ étant une puissance entière de 2.

7. Procédé selon la revendication 1, dans lequel:

(a) ledit autre signal est dérivé dudit signal de rotation en appliquant ledit train d'impulsions de capteur ou un signal dérivé de celles-ci sur un filtre passe-bas dont la fréquence de coupure est inférieure à la moitié d'une fréquence d'horloge prédéterminée et est supérieure à une composante maximale surveillée de la fréquence, présente dans ledit train d'impulsions de capteur, en délivrant en tant que sortie dudit filtre un train d'impulsions non ambiguës, et

(b) ledit autre signal est traité pour dériver ledit spectre du signal par les opérations consistant à :

(i) appliquer ledit train d'impulsions non ambiguës sur ledit convertisseur analogique-numérique, pour délivrer comme sortie de ce dernier des signaux numériques représentatifs desdites composantes de fréquence instantanée présentes dans ladite fréquence instantanée; et
(ii) exécuter électroniquement une analyse spectrale par transformée de Fourier desdits signaux numériques, en délivrant un spectre du signal par transformée de Fourier représentatif desdites composantes de fréquence instantanée.

8. Procédé selon la revendication 7, dans lequel ledit convertisseur analogique-numérique présente une porte d'entrée de signal d'horloge sur lequel un signal d'horloge est appliqué, et ledit signal d'horloge est obtenu par des opérations consistant à :

(a) dudit train d'impulsions de capteur ou d'un signal dérivé de ce dernier, enlever des composantes de signal représentatives de ladite modulation de ladite fréquence fondamentale de rotation angulaire, pour délivrer un train d'impulsions non modulées;
(b) appliquer ledit train d'impulsions démodulées sur un multiplicateur d'impulsions délivrant comme sortie un train d'impulsions démodulées multipliées; et
(c) appliquer ledit train d'impulsions démodulées multipliées sur ladite porte d'entrée de signal d'horloge en tant que ledit signal d'horloge, et cadencer avec ce dernier ledit convertisseur analogique-numérique.

9. Procédé selon la revendication 8, dans lequel ladite étape (a) est exécutée en faisant passer ledit train d'impulsions de capteur par un filtre passe-bande étroit présentant une bande passante centrée sur une fréquence moyenne $f_0$ desdites impulsions de capteur et qui s'étend au-dessus et en dessous de ladite fréquence $f_0$, entre les fréquences $f_0 + f_1$ et $f_0 - f_1$, $f_1$ étant inférieur à une fréquence $f'$ prédéterminée, ladite fréquence $f'$ étant une fréquence minimale étudiée parmi lesdites composantes du signal représentatives de ladite modulation de ladite fréquence fondamentale de rotation angulaire.

10. Procédé selon la revendication 7, dans lequel ledit spectre du signal par transformée de Fourier comporte une fréquence porteuse, une fréquence de bande latérale inférieure et une fréquence de bande latérale supérieure, chacune desdites fréquences présentant des composantes complexes de transformée de Fourier, et les interférences par bruit et par modulation d'amplitude sont réduites après ladite analyse spectrale par transformée de Fourier, par les étapes consistant à:

(a) combiner lesdites composantes complexes de ladite fréquence porteuse, de ladite fréquence de bande latérale inférieure et ladite fréquence de bande latérale supérieure, pour former des combinaisons complexes desdites composantes complexes de la transformée de Fourier; et
(b) établir la moyenne desdites combinaisons complexes sur des enregistrements successifs de données.

11. Procédé selon la revendication 10, dans lequel ledit spectre du signal par transformée de Fourier comporte un ensemble de composantes de signal dont chacune correspond à une fréquence spectrale d'un ensemble discret de fréquences spectrales, espacées l'une de l'autre d'un intervalle $k$ de fréquences spectrales, chacune desdites composantes de signal présentant une amplitude et une phase spectrales; ledit procédé étant adapté pour:

(i) séparer les composantes de signal desdits spectres de signal qui sont représentatives d'une modulation en fréquence de ladite fréquence fondamentale de rotation angulaire, et
(ii) séparer l'une de l'autre et par rapport au bruit, des composantes spectrales qui y sont représentatives de la modulation en amplitude de ladite fréquence fondamentale de rotation angulaire; ledit procédé comportant les étapes consistant à:

(a) dudit spectre du signal, extraire un premier signal représentatif d'une phase et d'une amplitude spectrales d'une première fréquence spectrale qui est la fréquence spectrale la plus proche de la fréquence $\omega_0$, ou $\omega_0$ est un taux moyen de répétition des impulsions du capteur;
(b) dudit spectre du signal, extraire un deuxième signal représentatif d'une phase et d'une amplitude spectrales d'une deuxième fréquence spectrale supérieure à ladite première fréquence spectrale d'un nombre $n$ d'intervalles de fréquence spectrale, $n$ étant un entier et $n \geq 0$, de sorte que ladite deuxième fréquence spectrale est située dans un intervalle de fréquences spectrales d'une fréquence de composante du signal $\omega_0 + \omega'$, avec $\omega' = nk$ ;

(c) dudit spectre du signal, extraire un troisième signal représentatif d'une phase et d'une amplitude spectrales d'une troisième fréquence spectrale inférieure à ladite première fréquence spectrale dudit *n* nombre d'intervalles de fréquence spectrale, de sorte que ladite troisième fréquence spectrale est située dans un intervalle de fréquences spectrales d'une fréquence de composante du signal $\omega_0 - \omega'$, avec $\omega' = nk$ ; et

(d) traiter numériquement ledit premier, ledit deuxième et ledit troisième signal pour délivrer un autre signal représentatif de fréquence de bande latérale provenant de sources modulant ladite fréquence $\omega_0$.

**12.** Procédé selon la revendication 11, dans lequel l'étape (d) comporte les étapes ci-dessous :

(a) délivrer un quatrième signal représentatif de la phase et de l'amplitude d'un conjugué complexe d'un carré dudit premier signal;

(b) délivrer un cinquième signal représentatif de la phase et de l'amplitude d'un produit dudit deuxième signal, dudit troisième signal et dudit quatrième signal;

(c) délivrer un sixième signal représentatif d'une somme desdits cinquièmes signaux sur un ensemble de *M* enregistrements de données, *M* étant un entier;

(d) délivrer un septième signal représentatif d'un carré d'une valeur absolue dudit premier signal;

(e) délivrer un huitième signal représentatif d'une somme desdits septièmes signaux sur ledit ensemble de M enregistrement de données; et

(f) délivrer un neuvième signal représentatif dont l'amplitude est représentative dudit sixième signal divisé par ledit huitième signal, ladite amplitude dudit neuvième signal indiquant si $\omega_0 + \omega'$ et $\omega_0 - \omega'$ sont des fréquences provenant de sources modulant ladite fréquence $\omega_0$.

**13.** Procédé selon la revendication 7, dans lequel ladite analyse spectrale par transformée de Fourier consiste à former un spectre de puissance.

**14.** Procédé selon la revendication 1, dans lequel, après les étapes 1 à 4, les étapes supplémentaires suivantes ont lieu :

(a) délivrer un premier signal représentatif d'une valeur initiale des informations de résonance pour au moins l'un desdits éléments rotatifs de ladite machine;

(b) délivrer un deuxième signal représentatif d'au moins une valeur suivante de ladite information de résonance desdits éléments rotatifs;

(c) comparer ledit premier signal audit deuxième signal et délivrer un signal de sortie indiquant si ledit premier signal et ledit deuxième signal ont une relation prédéterminée indiquant une dérive dans lesdites informations de résonance.

**15.** Appareil (14) de mesure d'informations de résonance concernant au moins un élément rotatif (16, 20, 22, 24, 26) d'une machine tournante (12), lesdits éléments rotatifs de la machine tournante comportant un élément d'arbre rotatif (16) et facultativement un ou plusieurs éléments rotatifs (20, 22, 24, 26) différents de l'arbre, dans lequel :

lesdits éléments rotatifs (16, 20, 22, 24, 26) tournent autour d'un axe à une fréquence fondamentale de rotation angulaire;

au moins l'un desdits éléments rotatifs présente des vibrations oscillantes présentant au moins un mode de vibration de résonance; et

lesdites vibrations oscillantes modulent ladite fréquence fondamentale de rotation angulaire en provoquant une modulation de ladite fréquence fondamentale de rotation angulaire;

ledit appareil comportant:

couplé à ladite machine tournante (12), un capteur (30) pour délivrer à une porte de sortie un signal de rotation représentatif de ladite fréquence de rotation angulaire de l'arbre, ledit capteur (30) délivrant à ladite porte de sortie un train d'impulsions de capteur de telle sorte que:

pour chaque tour complet dudit arbre (16), le capteur (30) génère *N* impulsions de capteur, *N* étant un entier positif;

chacune desdites *N* impulsions de capteur est représentative d'un incrément de rotation angulaire dudit arbre (16); et

lesdites impulsions, ou les intervalles qui les séparent, présentent une fréquence instantanée qui leur est associée;

couplé à ladite porte de sortie dudit capteur (30), un démodulateur (32) pour dériver dudit signal de rotation et pour délivrer sur une porte de sortie dudit démodulateur d'impulsions un autre signal qui est représentatif de ladite modulation de ladite fréquence fondamentale de rotation angulaire;

couplé à ladite porte de sortie dudit démodulateur de signal (32), une unité électronique de traitement (36) dotée de moyens lui permettant de:

traiter électroniquement ledit autre signal en délivrant à partir de lui un spectre du signal représentatif de composantes de fréquence instantanée présentes dans ladite fréquence instantanée; et

traiter électroniquement ledit spectre du signal en délivrant à partir de lui des signaux spectraux d'information de résonance représentatifs de caractéristiques de fréquence, d'amplitude ou des deux dudit mode de vibration de résonance.

16. Appareil selon la revendication 15, dans lequel:

ledit démodulateur d'impulsions comporte un convertisseur fréquence-tension (34) présentant une porte d'entrée sur laquelle est appliqué ledit train d'impulsions et présentant une porte de sortie couplée à ladite porte de sortie dudit démodulateur d'impulsions, et lesdites portes de sortie délivrent un signal analogique de tension dont une amplitude est représentative de ladite fréquence instantanée; et

ladite unité électronique de traitement (36) comprend:

un convertisseur analogique-numérique pour convertir ledit signal analogique de tension en signaux numériques, lesdits signaux numériques étant représentatifs desdites composantes de fréquence instantanée présentes dans ladite fréquence instantanée; et

un processeur de transformée de Fourier pour effectuer électroniquement une analyse spectrale par transformée de Fourier desdits signaux numériques, pour délivrer un spectre du signal par transformée de Fourier, ledit spectre du signal étant représentatif desdites composantes de fréquence instantanée.

17. Appareil selon la revendication 16, adapté pour affaiblir les amplitudes spectrales d'interférence aux fréquences harmoniques de l'arbre dudit spectre de fréquences par rapport à d'autres amplitudes spectrales, dans lequel ledit processeur de transformée de Fourier est configuré pour exécuter une transformée de Fourier discrète; ledit appareil comprenant les éléments supplémentaires ci-dessous pour traiter lesdits signaux numériques avant qu'ils atteignent ledit processeur de transformée de Fourier:

couplés audit convertisseur analogique-numériqueet adaptés pour recevoir lesdits signaux numériques, des moyens pour délivrer un enregistrement de données constitué d'un nombre entier $n$ de segments consécutifs de données, chacun desdits segments de données étant constitué d'un nombre entier $m$ desdits signaux numériques consécutifs;

couplés auxdits moyens pour délivrer un enregistrement des données, des moyens pour donner à chacun desdits segments de données une durée correspondant à un intervalle de temps contenant exactement un tour complet dudit arbre (16); et

couplés auxdits moyens pour délivrer un enregistrement des données, des moyens pour délivrer ledit enregistrement de données audit processeur de transformée de Fourier.

18. Appareil selon la revendication 17, dans lequel ledit convertisseur analogique-numérique présente une porte d'entrée de signal d'horloge pour recevoir des impulsions d'horloge et une porte d'entrée de commande, ledit appareil comportant en outre:

couplés à ladite porte de sortie dudit capteur (30), des moyens pour amener lesdites impulsions de capteur à ladite porte d'entrée de signal d'horloge en tant que lesdites impulsions d'horloge;

couplé à ladite porte d'entrée de signal d'horloge, un premier compteur pour compter lesdites impulsions d'horloge pour chacun desdits segments de données jusqu'à ce que ledit segment de données contienne des données d'un nombre desdites impulsions d'horloge qui représente exactement un tour complet dudit arbre (16), et pour délivrer ensuite un premier signal d'interruption sur une porte de sortie dudit premier compteur;

couplés à ladite porte de sortie dudit premier compteur et à ladite porte d'entrée de commande, des moyens pour interrompre ledit segment de données à la délivrance dudit premier signal d'interruption;

couplé à ladite porte d'entrée de signal d'horloge, un deuxième compteur pour compter lesdits segments de données de chacun desdits enregistrements de données jusqu'à ce que ledit enregistrement de données contienne un nombre entier desdits segments de données, et pour ensuite délivrer un deuxième signal d'interruption sur une porte de sortie dudit deuxième compteur; et

couplés à ladite porte de sortie dudit deuxième compteur et à ladite porte d'entrée de commande, des moyens pour interrompre ledit enregistrement de données à la délivrance dudit deuxième signal d'interruption.

**19.** Appareil selon la revendication 16, adapté pour affaiblir les amplitudes spectrales d'interférence aux fréquences harmoniques de l'arbre dudit spectre de fréquences par rapport à d'autres amplitudes spectrales, dans lequel ledit processeur de transformée de Fourier est configuré pour exécuter une transformée de Fourier rapide; ledit appareil comprenant les éléments supplémentaires ci-dessous pour traiter lesdits signaux numériques avant qu'ils atteignent ledit processeur de transformée de Fourier:

couplés audit convertisseur analogique-numérique et adaptés pour recevoir lesdits signaux numériques, des moyens pour délivrer un enregistrement de données constitué d'un nombre entier $n$ de segments consécutifs de données, chacun desdits segments de données étant constitué d'un nombre entier $m$ desdits signaux numériques consécutifs, et $n$ et $m$ sont chacun des puissances entières de deux;
couplés auxdits moyens pour délivrer un enregistrement des données, des moyens pour donner à chacun desdits segments de données une durée correspondant à un intervalle de temps contenant exactement un tour complet dudit arbre (16); et
couplés auxdits moyens pour délivrer un enregistrement des données, des moyens pour délivrer ledit enregistrement de données audit processeur de transformée de Fourier.

**20.** Appareil selon la revendication 19, dans lequel ledit convertisseur analogique-numérique présente une porte d'entrée de signal d'horloge pour recevoir des impulsions d'horloge et une porte d'entrée de commande, ledit appareil comportant en outre:

un circuit multiplicateur-diviseur d'impulsions présentant:

une porte d'entrée couplée à ladite porte de sortie dudit capteur (30) et adaptée pour en recevoir lesdites impulsions de capteur;
des moyens pour multiplier et diviser le taux de répétition desdites impulsions de capteur; et
délivrant sur une porte de sortie dudit circuit multiplicateur-diviseur un autre train d'impulsions dans lequel exactement un nombre entier $m$ d'impulsions apparaît dans chaque intervalle de temps contenant exactement un tour complet dudit arbre, $m$ étant une puissance entière de deux;

des moyens pour coupler ladite porte de sortie dudit circuit multiplicateur-diviseur à une porte d'entrée de signal d'horloge dudit convertisseur analogique-numérique et pour y amener ledit autre train d'impulsions, pour ainsi délivrer des impulsions d'horloge;

couplé à ladite porte d'entrée de signal d'horloge, un premier compteur pour compter lesdites impulsions d'horloge pour chacun desdits segments de données jusqu'à ce que ledit segment de données contienne des données d'exactement ledit nombre $m$ d'impulsions d'horloge et pour ensuite délivrer un premier signal d'interruption sur une porte de sortie dudit premier compteur;

couplés à ladite porte de sortie dudit premier compteur et à ladite porte d'entrée de commande, des moyens pour interrompre ledit segment de données à la délivrance dudit premier signal d'interruption;

couplé à ladite porte d'entrée de signal d'horloge, un deuxième compteur pour compter lesdits segments de données jusqu'à ce que ledit enregistrement de données contiennent exactement un nombre $m'$ desdits segments de données, $m'$ étant une puissance entière de deux, et pour ensuite délivrer un deuxième signal d'interruption sur une porte de sortie dudit deuxième compteur; et

couplés à ladite porte de sortie dudit deuxième compteur, des moyens pour interrompre ledit enregistrement de données à la délivrance dudit deuxième signal d'interruption.

**21.** Appareil selon la revendication 15, dans lequel ledit démodulateur d'impulsions (32) comporte un filtre passe-bas d'entrée couplé à ladite porte de sortie dudit capteur (30) ou à une source d'un signal qui en est dérivé, ledit filtre passe-bas présentant une fréquence de coupure inférieure à la moitié d'une fréquence d'horloge prédéterminée et est supérieure à une composante maximale surveillée de la fréquence, présente dans ledit train d'impulsions de capteur, ledit filtre délivrant sur une de ses sorties un train d'impulsions non ambiguës; et dans lequel ledit appareil comporte en outre:

couplé à ladite porte de sortie dudit filtre et adapté pour recevoir ledit train d'impulsions non ambiguës, un convertisseur analogique-numérique, pour délivrer sur une de ses sorties des signaux numériques représentatifs desdites composantes de fréquence instantanée présentes dans ladite fréquence instantanée; et
couplés à ladite porte de sortie dudit convertisseur analogique-numérique, des moyens pour exécuter électroniquement une analyse spectrale par transformée de Fourier desdits signaux numériques, en délivrant un spectre du signal par transformée de Fourier représentatif desdites composantes de fréquence instantanée.

**22.** Appareil selon la revendication 21, dans lequel ledit convertisseur analogique-numérique présente une porte d'entrée de signal d'horloge, ledit appareil comportant en outre:

couplés à ladite porte de sortie dudit capteur ou à une source d'un signal qui en est dérivé, des moyens de démodulation pour enlever dudit train d'impulsions de capteur ou d'un signal qui en est dérivé des composantes de signal représentatives de ladite modulation de ladite fréquence fondamentale de rotation angulaire, pour délivrer un train d'impulsions non modulées sur une porte de sortie dudit moyen de démodulation;
couplée à ladite porte de sortie desdits moyens de démodulation, une porte d'entrée d'un multiplicateur d'impulsions pour délivrer un train d'impulsions multipliées démodulées sur une porte de sortie dudit multiplicateur d'impulsions; et
couplés à ladite porte de sortie dudit multiplicateur d'impulsions, des moyens pour appliquer ledit train d'impulsions multipliées démodulées sur ladite porte d'entrée de signal d'horloge.

**23.** Appareil selon la revendication 22, dans lequel lesdits moyens de démodulation (32) comportent un filtre passe-bande étroit (70), ledit filtre présentant une bande passante centrée sur une fréquence moyenne $f_0$ desdites impulsions de capteur et qui s'étend au-dessus et en dessous de ladite fréquence $f_0$, entre les fréquences $f_0 + f_1$ et $f_0 - f_1$, $f_1$ étant inférieur à une fréquence $f'$ prédéterminée, ladite fréquence $f'$ étant une fréquence minimale étudiée parmi lesdites composantes du signal représentatives de ladite modulation de ladite fréquence fondamentale de rotation angulaire.

**24.** Appareil selon la revendication 21, dans lequel ledit spectre du signal par transformée de Fourier comporte une fréquence porteuse, une fréquence de bande latérale inférieure et une fréquence de bande latérale supérieure, chacune desdites fréquences présentant des composantes complexes de transformée de Fourier; et ledit appareil est adapté pour réduire les interférences par bruit et par modulation d'amplitude dans ladite analyse spectrale par transformée de Fourier; et dans lequel ladite unité électronique de traitement (36) comprend des moyens pour combiner lesdites composantes complexes de ladite fréquence porteuse, de ladite fréquence de bande latérale inférieure et ladite fréquence de bande latérale supérieure de ladite transformée de Fourier, pour former des combinaisons complexes desdites composantes complexes de la transformée de Fourier, et pour établir la moyenne desdites combinaisons complexes sur des enregistrements successifs de données.

**25.** Appareil selon la revendication 24, dans lequel ledit spectre du signal par transformée de Fourier comporte un ensemble de composantes de signal dont chacune correspond à une fréquence spectrale d'un ensemble discret de fréquences spectrales, espacées l'une de l'autre d'un intervalle $k$ de fréquences spectrales, chacune desdites composantes de signal présentant une amplitude et une phase spectrales; ledit appareil étant adapté pour séparer les composantes de signal desdits spectres de signal qui sont représentatives d'une modulation en fréquence de ladite fréquence fondamentale de rotation angulaire, et pour séparer l'une de l'autre et par rapport au bruit, des composantes spectrales qui y sont représentatives de la modulation en amplitude de ladite fréquence fondamentale de rotation angulaire; ladite unité électronique de traitement (36) dudit appareil comportant:

des premiers moyens pour extraire dudit spectre du signal un premier signal représentatif d'une phase et d'une amplitude spectrales d'une première fréquence spectrale qui est la fréquence spectrale la plus proche de la fréquence $\omega_0$, ou $\omega_0$ est un taux moyen de répétition des impulsions du capteur;
couplés auxdits premiers moyens, des deuxièmes moyens pour extraire dudit spectre du signal, un deuxième signal représentatif d'une phase et d'une amplitude spectrales d'une deuxième fréquence spectrale supérieure à ladite première fréquence spectrale d'un nombre $n$ d'intervalles de fréquence spectrale, $n$ étant un entier et $n \geq 0$, de sorte que ladite deuxième fréquence spectrale est située dans un intervalle de fréquences spectrales d'une fréquence de composante du signal $\omega_0 + \omega'$, avec $\omega' = nk$ ;

couplés auxdits deuxièmes moyens, des troisièmes moyens pour extraire dudit spectre du signal un troisième signal représentatif d'une phase et d'une amplitude spectrales d'une troisième fréquence spectrale inférieure à ladite première fréquence spectrale dudit $n$ nombre d'intervalles de fréquence spectrale, de sorte que ladite troisième fréquence spectrale est située dans un intervalle de fréquences spectrales d'une fréquence de composante du signal $\omega_0 - \omega'$, avec $\omega' = nk$ ; et

couplés auxdits premiers moyens, auxdits deuxièmes moyens et auxdits troisièmes moyens, d'autres moyens pour traiter numériquement ledit premier, ledit deuxième et ledit troisième signal pour délivrer un autre signal représentatif de fréquence de bande latérale provenant de sources modulant ladite fréquence $\omega_0$.

26. Appareil selon la revendication 25, dans lequel lesdits autres moyens comportent:

couplés auxdits premiers moyens, des quatrièmes moyens pour délivrer un quatrième signal représentatif de la phase et de l'amplitude d'un conjugué complexe d'un carré dudit premier signal;

couplés auxdits deuxièmes moyens, auxdits troisièmes moyens et auxdits quatrièmes moyens, des cinquièmes moyens pour délivrer un cinquième signal représentatif de la phase et de l'amplitude d'un produit dudit deuxième signal, dudit troisième signal et dudit quatrième signal;

couplés auxdits cinquièmes moyens, des sixièmes moyens pour délivrer un sixième signal représentatif d'une somme dudit cinquième signal sur un ensemble de $M$ enregistrement de données, $M$ étant un entier

couplés auxdits cinquièmes moyens, des septièmes moyens pour délivrer un septième signal représentatif d'un carré d'une valeur absolue dudit premier signal;

couplés auxdits septièmes moyens, des huitièmes moyens pour délivrer un huitième signal représentatif d'une somme desdits septièmes signaux sur ledit ensemble de $M$ enregistrements de données; et

couplés audits sixièmes moyens et auxdits huitièmes moyens, des neuvièmes moyens pour délivrer un neuvième signal dont l'amplitude est représentative dudit sixiéme signal divisé par ledit huitième signal, ladite amplitude dudit neuvième signal indiquant si $\omega_0 + \omega'$ et $\omega_0 - \omega'$ sont des fréquences provenant de sources modulant ladite fréquence $\omega_0$.

27. Appareil selon la revendication 21, dans lequel lesdits moyens pour effecteur ladite analyse spectrale par transformée de Fourier comportent des moyens permettant de former un spectre de puissance.

28. Appareil selon la revendication 15, qui comporte en outre:

couplés à ladite unité électronique de traitement (36), des premiers moyens pour délivrer à une première porte de sortie un premier signal représentatif d'une valeur initiale desdits signaux spectraux d'information de résonance;

couplés à ladite unité électronique de traitement (36), des deuxièmes moyens délivrer à une deuxième porte de sortie un deuxième signal représentatif d'au moins une valeur suivante desdits signaux spectraux d'information de résonance; et

couplé à ladite première porte de sortie et à ladite deuxième porte de sortie, un comparateur pour comparer ledit premier signal audit deuxième signal et délivrer un signal de sortie indiquant si ledit premier signal et ledit deuxième signal ont une relation prédéterminée indiquant une dérive dans lesdits signaux spectraux d'information de résonance.

FIG. 1

FIG. 2

FIG. 10

FIG. 3a

FIG. 3b

FIG. 3c

FIG. 4

FIG. 5

FIG. 12

ROTATION
FREQUENCY
(Hz)

30.001

30.000

29.999

10 20 30 40 50 60 70 80
TIME (msec)

*FIG. 6*

POWER

30 60 78 90 120 150
FREQUENCY (Hz)

I

*FIG. 7*

POWER

$f_c-78$

$f_c+78$

FREQUENCY
(Hz)

$f_c-90$ $f_c-60$ $f_c-30$ $f_c$ $f+30$ $f+60$ $f+90$

*FIG. 8*

$\mathcal{R}e\ \mathcal{G}\ (\omega_o, \omega')$

78 Hz

$\omega'$

$\omega_{AM}$

$\omega'$(Hz)

*FIG. 11*

EP 0 744 017 B1

48

POWER

FIG. 9a

$\overline{f}$ – Hz

POWER

FIG. 9b

$\overline{f}$ – Hz

MEAN RESONANT FREQUENCY $\overline{f}$
Hz

78.0

77.9

77.8

77.7

MONTHS

FIG 9c